(19) Europäisches Patentamt
European Patent Office
Office européen des brevets

(11) EP 1 664 979 B1

(12) **EUROPÄISCHE PATENTSCHRIFT**

(45) Veröffentlichungstag und Bekanntmachung des Hinweises auf die Patenterteilung:
**16.01.2008 Patentblatt 2008/03**

(21) Anmeldenummer: **04764804.3**

(22) Anmeldetag: **03.09.2004**

(51) Int Cl.:
***G06F 21/02*** *(2006.01)* ***H04L 9/06*** *(2006.01)*

(86) Internationale Anmeldenummer:
**PCT/EP2004/009852**

(87) Internationale Veröffentlichungsnummer:
**WO 2005/024606 (17.03.2005 Gazette 2005/11)**

(54) **ÜBERGANG ZWISCHEN MASKIERTEN REPRÄSENTATIONEN EINES WERTES BEI KRYPTOGRAPHISCHEN BERECHNUNGEN**

TRANSITION BETWEEN MASKED REPRESENTATIONS OF A VALUE DURING CRYPTOGRAPHIC CALCULATIONS

TRANSITION ENTRE DEUX REPRESENTATIONS MASQUEES D'UNE VALEUR LORS DE CALCULS CRYPTOGRAPHIQUES

(84) Benannte Vertragsstaaten:
**AT BE BG CH CY CZ DE DK EE ES FI FR GB GR HU IE IT LI LU MC NL PL PT RO SE SI SK TR**

(30) Priorität: **05.09.2003 DE 10341096**

(43) Veröffentlichungstag der Anmeldung:
**07.06.2006 Patentblatt 2006/23**

(73) Patentinhaber: **Giesecke & Devrient GmbH**
**81677 München (DE)**

(72) Erfinder:
- **NEISSE, Olaf**
  **78120 Furtwangen (DE)**
- **PULKUS, Jürgen**
  **80469 München (DE)**

(74) Vertreter: **Dendorfer, Claus**
**Dendorfer & Herrmann**
**Patentanwälte Partnerschaft**
**Bayerstrasse 3**
**80335 München (DE)**

(56) Entgegenhaltungen:
**WO-A-02/51064**

- **MESSERGES T S: "SECURING THE AES FINALISTS AGAINST POWER ANALYSIS ATTACKS" FAST SOFTWARE ENCRYPTION. INTERNATIONAL WORKSHOP, XX, XX, Bd. 1978, April 2000 (2000-04), Seiten 150-164, XP001040960**
- **CORON J-S ET AL: "ON BOOLEAN AND ARITHMETIC MASKING AGAINST DIFFERENTIAL POWER ANALYSIS" CRYPTOGRAPHIC HARDWARE AND EMBEDDED SYSTEMS. INTERNATIONAL WORKSHOP, XX, XX, 2000, Seiten 231-237, XP000989986 in der Anmeldung erwähnt**
- **GOUBIN L ED - KOC C K ET AL: "A SOUND METHOD FOR SWITCHING BETWEEN BOOLEAN AND ARITHMETIC MASKING" CRYPTOGRAPHIC HARDWARE AND EMBEDDED SYSTEMS. 3RD INTERNATIONAL WORKSHOP, CHES 2001, PARIS, FRANCCE, MAY 14 - 16, 2001 PROCEEDINGS, LECTURE NOTES IN COMPUTER SCIENCE, BERLIN : SPRINGER, DE, Bd. VOL. 2162, 14. Mai 2001 (2001-05-14), Seiten 3-15, XP008002644 ISBN: 3-540-42521-7 in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft allgemein das Gebiet der Kryptographie und spezieller das Gebiet des Ausspähungsschutzes von kryptographischen Berechnungen. Insbesondere betrifft die Erfindung den Übergang zwischen maskierten Repräsentationen eines Wertes, die auf unterschiedlichen Maskierungsregeln beruhen. Besonders eignet sich die Erfindung zur Verwendung bei einem tragbaren Datenträger wie z.B. einer Chipkarte in unterschiedlichen Bauformen oder einem Chipmodul.

Verschlüsselungsverfahren wie IDEA (*International Data Encryption Algorithm*), SAFER K-64 und RC5 sowie Hash-Algorithmen wie MD5 oder SHA-1 führen kryptographische Berechnungen aus, bei denen Nutz- und Schlüsseldaten durch eine Folge unterschiedlicher Rechenoperationen miteinander verknüpft werden. Hierbei werden häufig die Rechenoperationen $\mathbf{Xor}_L$, $\mathbf{Add}_M$ und $\mathbf{Mult}_M$ verwendet. Die Operation $\mathbf{Xor}_L$ ist die bitweise Exklusiv-Oder-Verknüpfung auf $L$ Bits; dies entspricht der Addition auf $(\mathbb{Z}/2\mathbb{Z})^L$. Die Operation $\mathbf{Add}_M$ ist die Addition modulo eines Modulus $M \in \mathbb{Z}$, und die Operation $\mathbf{Mult}_M$ ist die Multiplikation modulo eines Modulus $M \in \mathbb{Z}$. Von besonderer Bedeutung sind die Fälle $L$ = 8, 16, 32 für $\mathbf{Xor}_L$, $M = 2^8, 2^{16}, 2^{32}$ für $\mathbf{Add}_M$, und $M = 2^8+1, 2^{16}+1$ für $\mathbf{Mult}_M$.

Beim IDEA-Verfahren wird ferner eine modifizierte Multiplikation verwendet, die durch das Infix-Symbol $\otimes$ bezeichnet sei. Diese IDEA-Multiplikation ist definiert durch $d \otimes d' = \mathrm{I}^{-1}(\mathbf{Mult}_M(\mathrm{I}(d), \mathrm{I}(d')))$ für $d, d' \in \{0, ..., 2^{16}-1\}$, den Modulus $M = 2^{16}+1$ und die folgende "I-Transformation":

$$\mathrm{I} : \{0, ..., 2^{16}-1\} \rightarrow \{1, ..., 2^{16}\}\ , \qquad \mathrm{I}(d) = \begin{cases} 2^{16} \\ d \end{cases} \quad \textit{falls} \quad \begin{cases} d = 0 \\ d \neq 0 \end{cases}$$

Die IDEA-Multiplikation hat kryptographische Vorteile, weil sie sicherstellt, daß im Datenbereich der ausgeführten Multiplikation $\mathbf{Mult}_M$ der Wert Null nicht enthalten ist, und weil überdies eine Primzahl als Modulus M verwendet wird.

Werden Rechenoperationen wie die gerade genannten mit ungeschützten Daten durchgeführt, so kann mit Hilfe einer SPA (*Simple Power Analysis*) oder DPA (*Differential Power Analysis*) auf die Operanden und das Ergebnis zurückgeschlossen werden. Dadurch können geheime Informationen oder Schlüssel ausspioniert werden. SPA- und DPA-Verfahren beruhen auf einer Messung des Stromverbrauchs während der Ausführung der kryptographischen Berechnung durch eine programmgesteuerte Vorrichtung. Bei einem SPA-Angriff wird hierbei ein einziger Berechnungsvorgang untersucht. Bei einem DPA-Angriff wird dagegen eine Vielzahl von Berechnungsabläufen statistisch ausgewertet. In der Wortwahl des vorliegenden Dokuments sollen auch verwandte Angriffsverfahren, bei denen zusätzlich zum Stromverbrauch oder statt des Stromverbrauchs mindestens ein anderer physikalischer Parameter gemessen wird, als SPA- bzw. DPA-Verfahren bezeichnet werden.

Als Maßnahme gegen derartige Angriffe bietet es sich an, die gegen Ausspähung zu schützenden Daten um einen in der Regel zufällig gewählten Wert zu verändern. Dieser Wert wird "Maske" genannt, und die Rechenvorschrift, gemäß der die zu schützenden Daten mit der Maske verknüpft werden, um eine maskierte Repräsentation der zu schützenden Daten zu erhalten, wird im vorliegenden Dokument als "Maskierungsregel" bezeichnet. Die kryptographischen Berechnungsschritte werden dann mit den maskierten Daten durchgeführt. Wenn es einem Angreifer gelingt, die bei den kryptographischen Berechnungsschritten verarbeiteten Werte auszuspähen, so betrifft diese Ausspähung nur die maskierten Repräsentationen und nicht die gegen Ausspähung zu schützenden Daten.

Zur Datenverschleierung werden häufig die $\mathbf{Xor}_L$-Maskierungsregel und die $\mathbf{Add}_M$-Maskierungsregel eingesetzt. Bei der auch als "Boole'sche Maskierung" bezeichneten $\mathbf{Xor}_L$-Maskierungsregel wird der zu schützende Wert $d$ durch eine maskierte Repräsentation $y$ mit der üblicherweise zufällig gewählten Maske $x$ dargestellt, so daß $y = \mathbf{Xor}_L(x, d)$ gilt. Bei der auch als "arithmetische Maskierung" bezeichneten $\mathbf{Add}_M$-Maskierungsregel wird der zu schützende Wert $d$ durch eine maskierte Repräsentation $y$ mit der üblicherweise zufällig gewählten Maske $x$ dargestellt, so daß $0 \leq x \leq M-1$ und $y = \mathbf{Add}_M(x, d)$ gelten. Eine geringfügige Abwandlung der $\mathbf{Add}_M$-Maskierungsregel ist die $\mathbf{Sub}_M$-Maskierungsregel, bei der $y = \mathbf{Sub}_M(d, x)$ gewählt wird, wobei $\mathbf{Sub}_M(d, x)$ die kleinste nicht-negative Zahl $y$ ist, für die $\mathbf{Add}_M(x, y) = d$ gilt.

Es versteht sich, daß die jeweils verwendete Maskierungsregel mit dem auszuführenden Berechnungsschritt oder der Folge von Berechnungsschritten verträglich sein muß. Dies ist z.B. dann der Fall, wenn der Berechnungsschritt oder die Folge von Berechnungsschritten mit allenfalls geringfügigen Abänderungen auch auf die maskierte Repräsentation des zu schützenden Wertes anwendbar ist/ sind und dann im wesentlichen die maskierte Repräsentation des gewünschten Ergebnisses liefert/liefern. So ist z.B. die $\mathrm{Xor}_L$-Maskierungsregel offensichtlich mit Exklusiv-Oder-Berechnungsschritten und Bit-Permutationen verträglich, nicht aber mit Additionen oder Multiplikationen.

Bei der Ausführung komplexer kryptographischer Verfahren wie den eingangs genannten wechseln sich jedoch häufig Berechnungsschrittfolgen ab, die nur mit unterschiedlichen Maskierungsregeln verträglich sind. An der Schnittstelle zwischen solchen Schrittfolgen muß daher ein Übergang zwischen maskierten Repräsentationen eines zu schützenden Wertes, die auf unterschiedlichen Maskierungsregeln beruhen, bewerkstelligt werden. Hierbei stellt sich das Problem, den Maskierungsregelübergang so auszugestalten, daß ein Angreifer keine verwertbaren Informationen über die zu schützenden Daten erhalten kann.

Aus WO 02/51064 A1 sind Verfahren zum Maskierungsregelübergang von einer Boole'schen zu einer arithmetischen Maskierungsregel und umgekehrt bekannt. In je einer ersten Ausgestaltung wird hierbei eine Tabelle verwendet, die für eine fest vorgegebene Maske eine maskierte Repräsentation gemäß der ersten Maskierungsregel auf die entsprechende maskierte Repräsentation gemäß der zweiten Maskierungsregel abbildet. In einer zweiten Ausgestaltung wird eine solche Tabelle abschnittsweise auf Werte angewendet, die eine größere Bitlänge als die Bitlänge des Tabellenindex aufweisen. Hierbei wird ferner eine Übertragstabelle eingesetzt.

Der Artikel "On Boolean and Arithmetic Masking against Differential Power Analysis" von J.-S. Coron und L. Goubin, erschienen in dem Tagungsband zum "Workshop on Cryptographic Hardware and Embedded Systems 2000 (CHES 2000)", Band 1965 der Lecture Notes in Computer Science, Springer-Verlag, 2000, Seiten 231 - 237, beschreibt ein Verfahren zum Übergang von einer Boole'schen zu einer arithmetischen Maskierungsregel, bei dem eine Maske in Abhängigkeit von einem Verschleierungsparameter entweder komplementiert oder nicht-komplementiert in den Berechnungsablauf eingeht. In dem Artikel wird auf einen möglichen DPA-Angriff gegen dieses Verfahren hingewiesen.

Aus dem Artikel "A Sound Method for Switching between Boolean and Arithmetic Masking" von L. Goubin, erschienen in dem Tagungsband zum "Workshop on Cryptographic Hardware and Embedded Systems 2001 (CHES 2001)", Band 2162 der Lecture Notes in Computer Science, Springer-Verlag, 2001, Seiten 3 -15, sind Berechnungsverfahren zum Übergang zwischen Boole'schen und arithmetischen Maskierungsregeln bekannt, die in dem Artikel als sicher gegen DPA-Angriffe bezeichnet werden.

DE 198 22 217 A1 beschreibt ein Verfahren zum Ausspähungsschutz von Daten, bei dem vor der Ausführung von Operationen, die mit der verwendeten Maskierungsregel nicht verträglich sind, die Maskierung rückgängig gemacht wird.

Eine besondere Schwierigkeit beim ausspähungsgeschützten Maskierungsregelübergang ist die Vielzahl unterschiedlicher Informationsquellen, deren sich der Angreifer potenziell bedienen kann. Es besteht das Problem, während des Berechnungsablaufs sowohl die Zustände und Zustandsveränderungen von Variablen als auch die Zustandsbits eines Prozessors und deren Änderung statistisch unabhängig von den zu schützenden Daten zu halten. Unter "Zustandsbits" sind hierbei diejenigen Prozessorregisterbits (*flags*) zu verstehen, die z.B. einen Übertrag (*carry*) oder das Auftreten einer negativen Zahl oder eine andere von einem Berechnungsergebnis abhängige Eigenschaft anzeigen. Wird nur eine dieser potenziellen Informationsquellen nicht verstopft, so besteht weiterhin die Gefahr einer erfolgreichen DPA-Analyse.

Eine weitere Schwierigkeit ergibt sich aus der erheblichen Ressourcenbeschränkung, die insbesondere bei Chipkarten und anderen tragbaren Datenträgern vorliegt. Es wäre wünschenswert, den Maskierungsregelübergang hinsichtlich der benötigten Rechenleistung sowie hinsichtlich des benötigten Speicherplatzes für das Programm und für Hilfsdaten möglichst effizient bzw. speicherplatzsparend auszugestalten.

Die Erfindung hat demgemäß die Aufgabe, die oben genannten Probleme ganz oder zum Teil zu lösen und eine Technik zum ausspähungsgeschützten Übergang zwischen maskierten Repräsentationen eines Wertes, die auf unterschiedlichen Maskierungsregeln beruhen, zu schaffen. In bevorzugten Ausgestaltungen soll diese Technik insbesondere an die Gegebenheiten bei tragbaren Datenträgern angepaßt sein.

Erfindungsgemäß wird diese Aufgabe ganz oder zum Teil gelöst durch ein Verfahren mit den Merkmalen des Anspruchs 1, ein Verfahren mit den Merkmalen des Anspruchs 4, ein Computerprogrammprodukt gemäß Anspruch 15 und eine Vorrichtung, insbesondere einen tragbaren Datenträger, gemäß Anspruch 16. Die abhängigen Ansprüche betreffen bevorzugte Ausgestaltungen der Erfindung.

Die Erfindung beruht gemäß einem ersten Aspekt auf der Grundidee, bei der Berechnung der zweiten maskierten Repräsentation sowohl mindestens eine vorab berechnete Tabelle heranzuziehen als auch die Berechnung in Abhängigkeit von mindestens einem Verschleierungsparameter auszuführen. Überraschenderweise kann durch diese Kombination ein Ausspähen der geheim zu haltenden Daten sicher verhindert werden.

Gemäß einem zweiten Aspekt beruht die Erfindung auf der Grundidee, mindestens eine Vergleichstabelle zu verwenden, die für jeden Tabellenindex das Ergebnis eines Vergleichs zwischen einem von dem Tabellenindex abhängigen Wert und einem von einem Maskierungswert abhängigen Wert angibt. Auch durch die Verwendung einer solchen Tabelle ist eine ausspähungsgeschützte Berechnung bei akzeptablem Speicherplatzbedarf möglich.

Der erfindungsgemäße Übergang erfolgt von einer ersten zu einer zweiten Maskierungsregel und von einer ersten zu einer zweiten Maske. Normalerweise ist die erste Maskierungsregel verschieden von der zweiten Maskierungsregel, da sonst kein Maskierungsregelübergang erforderlich wäre. Die erste und die zweite Maske können gleich oder unterschiedlich sein. In bevorzugten Ausgestaltungen ist die zweite Maske frei wählbar; sie kann z.B. ein Eingabeparameter des Übergangsverfahrens sein. Die Sicherheit der kryptographischen Berechnung kann dadurch weiter gesteigert werden, weil zusätzlich zu dem Maskierungsregelübergang auch ein Maskenübergang zu einer neu - z.B. zufällig - gewählten zweiten Maske erfolgt.

Die verwendete Tabelle oder die verwendeten Tabellen kann/können in manchen Ausgestaltungen vorgegeben sein und z.B. im Zuge der Initialisierung oder Personalisierung eines Datenträgers in diesen geladen werden. Vorzugsweise wird/werden jedoch die Tabelle/n in einem vorbereitenden Verfahrensschritt berechnet und gespeichert. Dieser Verfahrensschritt kann unmittelbar oder mit zeitlichem Abstand vor dem Maskierungsregelübergang erfolgen. Eine Tabelle oder ein Tabellensatz kann für mehrere Maskierungsregelübergänge verwendet werden, wobei es jedoch aus Sicherheitsgründen empfehlenswert sein kann, von Zeit zu Zeit oder nach einer vorgegebenen Anzahl von Übergängen neue Tabellen oder Tabellensätze zu berechnen.

Eine besonders hohe Sicherheit wird erzielt, wenn jeder Eintrag in der Tabelle bzw. mindestens einer der Tabellen von mindestens einem vorab festgelegten Maskierungswert abhängt. Vorzugsweise wird dieser Maskierungswert bzw. jeder der Maskierungswerte zufällig bestimmt. Der Maskierungswert kann in manchen Ausgestaltungen als weitere Maske angesehen werden, auf die die Tabelle abgestimmt ist.

Ebenfalls zur Steigerung der Ausspähungssicherheit kann vorgesehen sein, während des Berechnungsablaufs mindestens ein Zwischenergebnis in Abhängigkeit von dem Verschleierungsparameter für einen weiteren Berechnungsschritt entweder komplementiert oder nicht-komplementiert zu verwenden.

Wenn eine Vergleichstabelle verwendet wird, hängt in bevorzugten Ausgestaltungen ein Wert, der in das in der Tabelle gespeicherte Vergleichsergebnis eingeht, entweder von dem komplementierten oder dem nicht-komplementierten Maskierungswert ab. Auf diese Weise werden der Berechnungsablauf und die dabei verarbeiteten Daten weiter verschleiert. Die Vergleichstabelle kann besonders speicherplatzsparend angelegt werden, wenn jeder Eintrag ein Vergleichsergebnis in Form eines Binärwerts, also eines einzigen Bits, angibt.

Um einen akzeptablen Speicherplatzbedarf für die Tabelle zu erreichen, weist die Tabelle vorzugsweise viel weniger Einträge auf, als sich durch die Bitlänge der maskierten Repräsentationen und/ oder Masken adressieren ließen. Es erfolgt dann bevorzugt ein wiederholter Zugriff auf die Tabelle, wobei jeweils einige Bits eines Zwischenergebnisses ausgewertet und in einen Tabellenzugriff umgesetzt werden. In solchen Ausgestaltungen ist die Bitlänge der maskierten Repräsentationen und/ oder Masken ein - vorzugsweise glattes - Vielfaches der Bitlänge des Tabellenindex, also des Logarithmus zur Basis 2 der Anzahl adressierbarer Einträge in der Tabelle.

Auch bei einer Vergleichstabelle ist die Bitlänge des Tabellenindex vorzugsweise deutlich geringer als die Bitlänge der im Berechnungsverlauf verwendeten Variablen. Die Vergleichstabelle wird dann in bevorzugten Ausgestaltungen mehrfach auf aufeinanderfolgende Bitabschnitte eines Zwischenergebnisses angewendet, um je einen Übertragswert (*carry*) zu bestimmen. Die so ermittelten Übertragswerte können individuell ausgewertet oder zu einem gemeinsamen Übertrag für die Gesamtberechnung kombiniert werden.

In vorteilhaften Ausführungsformen der Erfindung erfolgt zunächst unter Beibehaltung der ersten Maskierungsregel ein Übergang von der ersten zu einer dritten Maske, wobei die dritte Maske auf die Ausgestaltung der mindestens einen Tabelle zugeschnitten ist. Es wird dann die mindestens eine Tabelle verwendet, um den Übergang zu der zweiten Maskierungsregel durchzuführen. Damit geht in manchen Ausführungsformen ein durch die Ausgestaltung der Tabelle vorgegebener Übergang zu einer vierten Maske einher. In einem weiteren Schritt wird daher vorzugsweise unter Beibehaltung der zweiten Maskierungsregel die maskierte Repräsentation so verändert, daß sie nicht mehr auf der vierten, sondern auf der gewünschten zweiten Maske beruht. Es sind auch Ausgestaltungen dieses Verfahrens vorgesehen, bei denen die erste und dritte Maske identisch sind und/ oder die zweite und vierte Maske identisch sind.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch auch ein nichtkörperliches Medium sein, z.B. ein über ein Computernetzwerk übermitteltes Signal. Insbesondere kann das Computerprogrammprodukt Programmbefehle enthalten, die im Zuge der Herstellung oder der Initialisierung oder der Personalisierung eines tragbaren Datenträgers in diesen eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen wie z.B. Schnittstellenschaltungen, Zeitgeber und Verbindungselemente.

In bevorzugten Weiterbildungen weisen das Computerprogrammprodukt und/oder die Vorrichtung Merkmale auf, die den in der vorliegenden Beschreibung erwähnten und/oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Die folgenden Abschnitte A - G betreffen:

Abschnitt A ein Vergleichsbeispiel eines Verfahrens zum Übergang von einer $\mathbf{Add}_2{}^L$-Maskierungsregel zu einer **Xor**$_L$-Maskierungsregel,

Abschnitt B ein erstes Ausführungsbeispiel der Erfindung für den Übergang von der **Add**$_{2^L}$-Maskierungsregel zu der **Xor**$_L$-Maskierungsregel,

Abschnitt C ein zweites Ausführungsbeispiel der Erfindung für den Übergang von der **Add**$_{2^L}$ -Maskierungsregel zu der **Xor**$_L$-Maskierungsregel,

Abschnitt D ein Ausführungsbeispiel der Erfindung für den Übergang von der **Add**$_{2^L}$-Maskierungsregel zu einer **Add**$_{2^L+1}$ -Maskierungsregel,

Abschnitt E ein Ausführungsbeispiel der Erfindung für den Übergang von der **Add**$_{2^L+1}$-Maskierungsregel zu der **Add**$_{2^L}$-Maskierungsregel,

Abschnitt F ein Ausführungsbeispiel der Erfindung für den Übergang von einer **Add**$_{2^L}$-Maskierungsregel zu einer I (-)-Maskierungsregel, und

Abschnitt G ein Ausführungsbeispiel der Erfindung für den Übergang von der I(-)-Maskierungsregel zu der **Add**$_{2^L}$-Maskierungsregel.

Die folgenden Bezeichnungen und Schreibweisen werden im vorliegenden Dokument verwendet:

$\mathbb{N}$ Menge der natürlichen Zahlen

$\mathbb{Z}$ Menge der ganzen Zahlen

V(L) Die Menge der Bitsequenzen der Länge $L$ für $L$ in $\mathbb{N}$. Eine Bitsequenz $x \in$ V($L$) wird durch $(x_{L-1}, ..., x_0) \rightarrow x_{L-1}2^{L-1}+ ...+x_0$ auch als Zahl im Bereich 0,1, ..., $2^L$-1 angesehen, so daß V($L$) mit der Zahlenmenge {0,1,...,$2^L$-1} identifiziert wird.

$x[i]$ Das $i$-te Bit $x_i$ von $x=(x_{L-1}, ..., x_0) \in$ V($L$) für $i$= 0, ..., $L$-1.

$x \oplus_L y$ Infix-Schreibweise für $Xor_L$ $(x,y)$

$x +_L y$ Infix-Schreibweise für $Add_L$ $(x,y)$

$Sub_L$ $(x,y)$ Die kleinste nicht-negative Zahl $z$, für die $y +_L z$ = x gilt.

$x -_L y$ Infix-Schreibweise für **Sub**$_L$ $(x,y)$

$\overline{x}$ Das 1-Komplement $x \oplus_L$ (1, ...,1); statt "1-Komplement" wird im vorliegenden Dokument oft einfach der Begriff "Komplement" verwendet.

$\mathbb{1}(x, y)$ Indikatorfunktion für $x$, $y$ in $\mathbb{Z}$ mit Wert 1 genau dann, wenn $x < y$ gilt, andernfalls Wert 0.

$(x|y)$ Aneinanderreihung der Bitsequenzen von $x$ und $y$.

### A. Wechsel von Add$_{2^L}$ nach Xor$_L$ (Vergleichsbeispiel)

Die in den Abschnitten A - C beschriebenen Verfahren betreffen jeweils den Übergang von einer **Add**$_{2^L}$-Maskierungsregel zu einer **Xor**$_L$-Maskierungsregel. Es seien $L$ in $\mathbb{N}$ und $M = 2^L$; in der Praxis beträgt der Wert von $L$ zumeist 8 oder 16 oder 32.

Die Eingabeparameter der drei in den Abschnitten A - C beschriebenen Verfahren sind jeweils Werte $x$, $y$ und $u$, wobei $y$ eine maskierte Repräsentation eines geheimen Wertes $d \in$ V($L$) mit einer **Add**$_M$-Maskierungsregel und einer Maske $x$ ist; es gilt also $x +_M d = y$. Der Wert $u \in$ V($L$) gibt die Maske an, bezüglich derer die neu zu berechnende maskierte Repräsentation nach dem Maskierungsregelübergang ausgedrückt sein soll.

Als Ausgabe erzeugen die in den Abschnitten A - C beschriebenen Verfahren jeweils einen Wert $\upsilon \in$ V($L$), der die maskierte Repräsentation des geheimen Wertes $d$ mit der **Xor**$_L$-Maskierungsregel und der Maske $u$ darstellt; es gilt also $u \oplus_L \upsilon = d$.

Das im vorliegenden Abschnitt A als Vergleichsbeispiel beschriebene Verfahren arbeitet mit einer "großen" Tabelle. Zur Ausführung durch einen tragbaren Datenträger ist dieses Verfahren wegen des hohen Speicherplatzbedarfs sowie wegen des hohen Zeitaufwands zur Tabellenberechnung allenfalls für kleine Werte $L$, z.B. bis $L = 8$, praktikabel. Die hier gegebene Darstellung soll primär dem besseren Verständnis der in den Abschnitten B - G beschriebenen Ausführungsbeispiele dienen.

Bei dem hier beschriebenen Verfahren wird in vorbereitenden Schritten (A.a) und (A.b) eine Tabelle T erzeugt, deren Einträge den Übergang von der $\mathrm{Add}_{2L}$ -Maskierungsregel mit einer zufällig gewählten Maske $r$ zur $\mathbf{Xor}_L$-Maskierungsregel mit einer zufällig gewählten Maske s betreffen. Die Zufallszahlen $r$, $s$ werden auch als "Maskierungswerte" bezeichnet:

(A.a) Wähle Zufallszahlen $r, s \in \mathrm{V}(L)$.
(A.b) Erzeuge die Tabelle $\mathrm{T}[0, ..., 2^L-1]$ mit:

$$\mathrm{T}(i) = \mathtt{Xor}_L(\mathtt{Sub}_M(i, r), s) \text{ für } i = 0, ..., (2^L-1) .$$

Der Maskierungsregelwechsel findet in den folgenden Schritten (A.1) - (A.3) statt. In Schritt (A.1) wird die maskierte Repräsentation y von der ursprünglichen Maske x auf die durch die Tabelle T vorgegebene Maske r umgerechnet. In Schritt (A.2) erfolgt der Wechsel von der $\mathbf{Add}_2{}^L$-Maskierungsregel zu der $\mathbf{Xor}_L$ -Maskierungsregel durch einen Tabellenzugriff. In Schritt (A.3) wird das aus der Tabelle T entnommene Zwischenergebnis $o$ aus der durch die Tabelle T vorgegebenen Maske s in eine maskierte Repräsentation zur gewünschten Maske $u$ umgerechnet:

(A.1) Berechne $i = \mathbf{Sub}_M(\mathbf{Add}_M(y, r), x)$.
(A.2) Setze $o = \mathrm{T}(i)$ .
(A.3) Berechne $\upsilon = \mathbf{Xor}_L(s, \mathbf{Xor}_L(o, u))$.

Das Verfahren beugt DPA-Angriffen vor. Insbesondere sind die Zustände und Zustandsübergänge der Zustandsbits eines Prozessors bei der Ausführung des Verfahrens von dem geheimen Wert $d$ unabhängig.

Die in den folgenden Abschnitten B - G beschriebenen Verfahren stellen eine bedeutende Weiterentwicklung des vorliegend beschriebenen Verfahrens dar. Insbesondere werden dort "kleinere" Tabellen verwendet, und die Berechnung der Maskenübergangselemente $i$ und $o$ wird aus mehreren Tabellenzugriffen zusammengesetzt.

Die folgenden Anmerkungen zu möglichen Abwandlungen des hier dargestellten Verfahrens sind analog auch auf die in den Abschnitten B - G beschriebenen Verfahren anwendbar.

In einer Ausführungsalternative kann vorgesehen sein, die Tabelle T statt durch $\mathrm{T}(i) = \mathbf{Xor}_L(\mathbf{Sub}_M(i, r), s)$ durch $\mathrm{T}(i) = \mathbf{Xor}_L(\mathbf{Add}_M(i, r), s)$ aufzubauen. Es versteht sich, daß dann die weiteren Berechnungen entsprechend angepaßt werden müssen.

In einer weiteren alternativen Ausgestaltung kann in Schritt (A.1) statt $i = \mathbf{Sub}_M(\mathbf{Add}_M(y, r), x)$ auch $i = \mathbf{Add}_M(\mathbf{Sub}_M(r, x), y)$ gerechnet werden. Die beiden Operationen sollten in jedem Fall nicht unmittelbar nacheinander ausgeführt werden. Vielmehr ist es vorteilhaft, in einem Zwischenschritt das Zustandsregister des Prozessors zu löschen, da sonst die Veränderung des Übertragsbits (*carry bit*) datenabhängig wäre.

Statt $\upsilon = \mathbf{Xor}_L(s, \mathbf{Xor}_L(o, u))$ in Schritt (A.3) kann in Ausführungsalternativen gleichwertig auch $\upsilon = \mathbf{Xor}_L(o, \mathbf{Xor}_L(s, u))$ gerechnet werden.

Ferner lassen sich in Ausführungsalternativen des Verfahrens einige Rechenschritte einsparen, indem $x = r$ und/oder $u = s$ angesetzt werden/wird.

## B. Wechsel von $\mathbf{Add}_2{}^L$ nach $\mathbf{Xor}_L$ (1. Ausführungsbeispiel)

Bei dem nun zu beschreibenden Ausführungsbeispiel ist das Verfahren von Abschnitt A dahingehend abgewandelt, daß statt einer "großen" Tabelle eine "kleine" Umrechnungstabelle T und eine zusätzliche Vergleichstabelle C verwendet werden. Die Vergleichstabelle C enthält Informationen über einen bei bestimmten Berechnungsschritten auftretenden Übertrag (*carry*). Jeder Eintrag in der Vergleichstabelle C besteht nur aus einem einzigen Bit. Bei einer konkreten Implementierung des Verfahrens können z.B. je acht Tabelleneinträge in einem Speicherbyte zusammengefaßt werden, oder die Vergleichstabelle C kann in nicht benötigten Bits anderer Datenstrukturen angelegt werden.

Die Größe der Tabellen T und C wird üblicherweise bei der Implementierung der hier beschriebenen Verfahren festgelegt. Hierzu wird die Anzahl $l$ der pro Umrechnungsdurchlauf bearbeiteten Bits als "kleiner" Teiler von $L$ gewählt. Im vorliegenden Ausführungsbeispiel ist $l$ die Bitbreite des Tabellenindex $i$, und die Anzahl der Einträge in jeder Tabelle T, C beträgt $2^l$ . Ferner weisen die Einträge der Umrechnungstabelle T die Bitbreite $l$ auf. In typischen Implementierungen kann z.B. $(L, l) = (32, 8)$, $(16, 8)$ oder $(16,4)$ gelten. Ferner seien $k = L/l$ und $m = 2^l$ . In Ausführungsvarianten kann vorgesehen sein, die Tabellengröße $2^l$ bei der Implementierung noch nicht vollständig festzulegen, sondern den Wert

$l$ - gegebenenfalls in Abhängigkeit von einem geeigneten Parameter - erst zur Laufzeit zu bestimmen.

Bei der Auswahl des Wertes $l$ ist zu berücksichtigen, daß kleine Werte $l$ viel Rechenaufwand beim Maskenwechselverfahren und wenig Rechenaufwand bei der Vorbereitung verursachen; bei großen Werten von $l$ ist dies umgekehrt. Überdies ist der Speicheraufwand für die Tabellen T und C um so kleiner, je kleiner $l$ gewählt wird. Insgesamt soll der Wert $l$ in der Regel so festgelegt werden, daß bei vertretbarem Speicherplatzbedarf die insgesamt benötigte Rechenzeit möglichst klein ist.

Nutzt man die natürliche Einbettung von {0, ..., $M$-1} in {0, ..., $2^{L'-1}$} bzw. die natürliche Projektion {0, ..., $2^{L'-1}$} nach {0, ..., $M$-1} für ein $L' > L$, so kann in Ausführungsalternativen auch eine Zerlegung $L' = kl$ verwendet werden. Dies ist z.B. dann vorteilhaft, wenn $L$ keinen geeigneten Teiler $l$ besitzt. Es versteht sich, daß die Überlegungen des laufenden Absatzes und der beiden vorhergehenden Absätze entsprechend auch für die in den Abschnitten C - G beschriebenen Verfahren gelten.

Zur Vorbereitung des hier beschriebenen Verfahrens werden die Schritte (B.a) - (B.c) ausgeführt. In den Schritten (B.a) und (B.b) werden die Maskierungswerte $r$, $s$ und der Verschleierungsparameter $z$ zufällig gewählt, und in Schritt (B.c) werden die Tabellen T, C basierend auf diesen Werten erstellt. Bei der Berechnung der beiden Tabellen T, C in Schritt (B.c) werden die Maskierungswerte $r$, $s$ komplementiert herangezogen, wenn der Verschleierungsparameter $z$ den Wert "1" aufweist, und die Maskierungswerte $r$, $s$ werden nicht-komplementiert herangezogen, wenn der Verschleierungsparameter $z$ den Wert "0" aufweist:

(B.a) Wähle zwei Zufallszahlen $r, s \in V(l)$ als Maskierungswerte.

(B.b) Wähle ein Zufallsbit $z \in \{0,1\}$ als Verschleierungsparameter.

(B.c) Erzeuge die Tabellen T[0, ...,$m$-1] und C[0, ..., $m$-1] mit:

$$T(i) = \mathbf{Xor}_l(\mathbf{Sub}_m(i, r \oplus_l (\overbrace{z|\ldots|z}^{l})), s \oplus_l (\overbrace{z|\ldots|z}^{l}))$$

für i=0,..., ($m$-1) und und

$$C(i) = \mathbb{1}(i, r \oplus_l (\overbrace{z|\ldots|z}^{l}))$$

für i=0,..., ($m$-1).

Der Maskierungsregelübergang wird durch die folgenden Schritte (B.1) - (B.10) ausgeführt. In den Schritten (B.1) und (B.3) werden hierbei in Abhängigkeit von dem Wert des Verschleierungsparameters $z$ unterschiedliche Berechnungen vorgenommen. Die Schritte (B.5) - (B.9) bilden eine Schleife, in der jeweils ein $l$ Bit breiter Abschnitt zweier $L$ Bit breiter Zwischenergebnisse $g$ und $y'$ bearbeitet werden. Als Ergebnis jedes Schleifendurchlaufs werden jeweils $l$ Bits der zu berechnenden maskierten Repräsentation $\upsilon$ bestimmt:

(B.1) Berechne $g = \mathbf{Xor}_L(\mathbf{Sub}_M((\overbrace{r|\ldots|r}^{k}), x), (\overbrace{z|\ldots|z}^{L}))$; es sei $g = (g_k | \ldots | g_1)$.

(B.2) Berechne $h = \mathbf{Xor}_L((\overbrace{s|\ldots|s}^{k}), u)$; es sei $h = (h_k | \ldots | h_1)$.

(B.3) Berechne $y' = y \oplus_L (\overbrace{z|\ldots|z}^{L})$; es sei $y' = (y_k' | \ldots | y_1')$.

(B.4) Setze $c = 0$ und $\tilde{c} = 0$.

(B.5) Für $j$ =1, ..., $k$ führe eine Schleife mit den Schritten (B.6) - (B.9) aus:

(B.6) Berechne $i = y_j' +_m c +_m g_j$, und setze $\tilde{c}$ als Übertragsbit (*Carry*-Bit) der Addition $y_j' + \tilde{c} + g_j$ mit Übertrag modulo $m$ an.

(B.7) Berechne $i = \mathbf{Sub}_m(i, c)$, und setze c als Borgungsbit (*Carry*- oder *Borrow*-Bit) der Subtraktion.

(B.8) Setze $o = T(i)$ und $c = c \vee C(i)$ .

(B.9) Berechne $\upsilon_j = \mathbf{Xor}_l(h_j, o)$.

(B.10) Setze $\upsilon = (\upsilon_k |...| \upsilon_1)$.

Das hier beschriebene Verfahren beugt DPA-Angriffen vor, da während des Berechnungsablaufs sowohl die Bits *c* und $\tilde{c}$ als auch alle Zustandsbits des die Berechnung ausführenden Prozessors sowie die Zwischenergebnisse bei unabhängig variierenden Zufallsgrößen *x, u, r,* s, *z* von dem geheimen Wert *d* unabhängig sind.

Sind bei einem kryptographischen Verfahren mehrere Maskierungsregelübergänge erforderlich, so brauchen die vorbereitenden Schritte (B.a) - (B.c) in der Regel nur ein einziges Mal am Anfang ausgeführt zu werden. Die Tabellen T und C können dann für jeden Maskierungsregelübergang verwendet werden, wodurch sich der Gesamtaufwand erheblich verringert. Wenn für mehrere Maskierungsregelübergänge die gleichen Masken x und/oder *u* verwendet werden, dann können die Schritte (B.1) und/oder (B.2) als vorbereitende Schritte für diese Übergänge gemeinsam ausgeführt werden.

In Ausführungsvarianten kann vorgesehen sein, die Tabelle T statt durch T(*i*) = $\mathbf{Xor}_l$ ($\mathbf{Sub}_m$ (*i, r* ...), *s* ...) durch T(*i*) = $\mathbf{Xor}_l$ ($\mathbf{Add}_m$ (*i, r* ...), *s* ...) zu definieren. In diesem Fall müssen natürlich die Definition von *c* und die Rechenschritte des weiteren Verfahrens entsprechend angepaßt werden.

Gemäß einer weiteren Ausführungsalternative kann g in Schritt (B.1) statt als Ausdruck in *r* und *x* auch als Ausdruck in *r* und *y* geschrieben werden, wenn die entsprechenden Anpassungen bei den weiteren Berechnungsschritten vorgenommen werden.

Ferner kann das Verfahren dahingehend abgewandelt werden, daß in den Schritten (B.1) und (B.2) statt mit (*r* |...| *r*) und (*s* |...| *s*) jeweils mit *k* unterschiedlichen Werten für die Maskierungswerte, also mit $(r_k |...| r_1)$ und $(s_k |...| s_1)$ gearbeitet wird. In diesem Fall ist es jedoch erforderlich, eine entsprechende Anzahl von Tabellen $T_i$ und $C_i$ ($i$ =1, ..., *k*) zu erzeugen und zu speichern.

Die Schritte (B.1) - (B.3) sind im hier beschriebenen Verfahren Berechnungen auf V(*L*). In Ausführungsalternativen können diese Schritte durch je *k* Operationen auf V(*l*) ausgeführt werden.

Als Alternative zu Schritt (B.6) kann auch vor der Schleife $(i_k| ... |i_1)$= $\mathbf{Sub}_M(y, g)$ berechnet werden. Im Schleifenkörper kann dann jeweils $i = i_j$ gesetzt werden. Dieser Berechnungsvorgang bietet allerdings weniger Schutz gegen DPA-Angriffe.

Alternativ zur einmaligen Erzeugung des Zufallsbits *z* als Verschleierungsparameter in dem vorbereitenden Schritt (B.b) kann der Verschleierungsparameter *z* auch erst bei jeder Maskierungsregelumwandlung erneut zufällig gewählt werden. Die hierzu nötigen Modifikationen werden im folgenden Abschnitt C erläutert.

## C. Wechsel von $\mathbf{Add}_{2L}$ nach $\mathbf{Xor}_L$ (2. Ausführungsbeispiel)

Bei dem im vorherigen Abschnitt B beschriebenen Verfahren wird die ein Bit breite Vergleichstabelle C zusätzlich zu der V(*l*)-wertigen Tabelle T generiert.

Wenn der Wert *l* gleich der Wortbreite des verwendeten Prozessors oder ein glattes Vielfaches oder ein glatter Teiler davon ist, kann es problematisch sein, eine geeignete Datenstruktur für die Tabelle C zu finden. Das im vorliegenden Abschnitt beschriebene Verfahren ist daher gegenüber dem Verfahren von Abschnitt B so abgewandelt, daß die Einträge in der Tabelle T nur eine Bitbreite von *l*-1 aufweisen. Dies hat den Vorteil, daß die beiden Tabellen T und C in einem einzigen Speicherfeld mit *m* Einträgen zu je *l* Bit angelegt werden können.

Wiederum geht das Verfahren von Werten *l, k* und *m* aus, die in der Regel als Entwurfsentscheidung bei der Implementierung des Verfahrens festgelegt wurden. Wie in Abschnitt B sei der Wert *l* ein "kleiner" Teiler von *L*, z.B. (*L*, *l*) = (32, 8), (16, 8), (16, 4), und es gelte $k = L/l$ und $m=2^l$. Zur Vorbereitung werden die folgenden Schritte (C.a) und (C.b) ausgeführt:

(C.a) Wähle Zufallszahlen $r \in$ V(*l*) und $s \in$ V(*l-1*) als Maskierungswerte.

(C.b) Erzeuge die Tabellen T[0, ..., *m*-1] und C[0, ..., *m*-1] mit:

$$T(i) = \mathbf{Xor}_{l-1} ( \mathbf{Sub}_m (i, r) >> 1, s) \quad \text{für } i=0, ..., (m-1)$$

und

$$C(i) = \mathbb{1}(i, r) \qquad \text{für } i=0, ..., (m-1).$$

Die Operation "$\mathbf{Sub}_m$ (*i, r*) >> 1" in Schritt (C.b) bezeichnet hierbei das Schieben des Operanden $\mathbf{Sub}_m$ (*i, r*)

um eine Bitstelle, und zwar nach rechts bzw. links, so daß das geringstwertige Bit verloren geht.

Der Maskierungsregelübergang wird durch die folgenden Schritte (C.1) - (C.12) ausgeführt. Die Schritte (C.1) und (C.2) wurden bei dem in Abschnitt B beschriebenen Verfahren bereits im Zusammenhang mit den vorbereitenden Schritten (B.b) und (B.c) ausgeführt, während die Schritte (C.3) - (C.12) ungefähr den Schritten (B.1) - (B.10) entsprechen:

(C.1) Wähle ein Zufallsbit $z \in \{0,1\}$ als Verschleierungsparameter.

(C.2) Setze $r' = r \oplus_l (\overbrace{z|\ldots|z}^{l})$, $s' = s \oplus_l (\overbrace{z|\ldots|z}^{l})$.

(C.3) Berechne $g = \mathbf{Xor}_L(\mathbf{Sub}_M((\overbrace{r'|\ldots|r'}^{k}), x), (\overbrace{z|\ldots|z}^{L}))$; es sei $g = (g_k \mid \ldots \mid g_1)$.

(C.4) Berechne $h = \mathbf{Xor}_L((\overbrace{(s'|r'[0])|\ldots|(s'|r'[0])}^{k}), u)$; es sei $h = (h_k \mid \ldots \mid h_1)$.

(C.5) Berechne $y' = y \oplus_L (\overbrace{z|\ldots|z}^{L})$; es sei $y' = (y_k' \mid \ldots \mid y_1')$.

(C.6) Setze $c = 0$ und $\tilde{c} = 0$.

(C.7) Für $j = 1, \ldots, k$ führe eine Schleife mit den Schritten (C.8) - (C.11) aus:

(C.8) Berechne $i = y_j' +_m \tilde{c} +_m g_j$, und setze $c$ als Übertragsbit (*Carry*-Bit) der Addition $y_j' + \tilde{c} + g_j$ mit Übertrag modulo $m$ an.
(C.9) Berechne $i = \mathbf{Sub}_m(i, c)$, und setze $c$ als Borgungsbit (*Carry*- oder *Borrow*-Bit) der Subtraktion.
(C.10) Setze $o = T(i)$ und $c = c \vee C(i)$.
(C.11) Berechne $\upsilon_j = \mathbf{Xor}_l(h_j, (o|i[0]))$.

(C.12) Setze $\upsilon = (\upsilon_k \mid \ldots \mid \upsilon_1)$.

Da die Tabelle T bei dem vorliegenden Verfahren Werte aus V(*l-1*) enthält, bleibt in jedem Eintrag Platz für je ein zusätzliches Bit, das sich zur Speicherung des Wertes der Tabelle C nutzen läßt. Schritt (C.10) kann dann mit einem einzigen Speicherzugriff ausgeführt werden. Insgesamt ist das Verfahren daher im Hinblick auf die Rechenarithmetik und den Speicherzugriff besonders effizient.

Die Anmerkungen im vorherigen Abschnitt B zu dem dort beschriebenen Verfahren treffen auf das vorliegende Verfahren analog zu.

Bei dem hier dargestellten Verfahren wird in Schritt (C.1) der Verschleierungsparameter *z* als Zufallsbit bei jeder Maskenumwandlung neu gewählt. Diese Technik kann analog bei dem Verfahren gemäß Abschnitt B angewendet werden. Andererseits kann auch die in Abschnitt B beschriebene Technik, den Verschleierungsparameter *z* schon bei den vorbereitenden Schritten zufällig zu wählen und in die Tabellen T, C einfließen zu lassen, in einer Ausführungsalternative des vorliegend beschriebenen Verfahrens verwendet werden.

In Schritt (C.4) kann in einer alternativen Ausgestaltung statt des Wertes $r'[0]$ bei der Berechnung von *h* auch ein Zufallsbit eingesetzt werden. Dieses Zufallsbit muß dann auch in Schritt (C.11) anstelle von $i[0]$ verwendet werden.

## D. Wechsel von $\mathbf{Add}_{2^L}$ nach $\mathbf{Add}_{2^L+1}$

Die Abschnitte D und E betreffen den Übergang zwischen der $\mathbf{Add}_{2^L}$-Maskierungsregel und der $\mathbf{Add}_{2^L+1}$-Maskierungsregel. Es werden die folgenden beiden Beobachtungen für *M* in $\mathbb{N}$ verwendet, wobei die Beobachtung (*) für den vorliegenden Abschnitt und die Beobachtung (**) für Abschnitt E relevant ist:

(*) Für $a, d \in \{0,1, \ldots, M-1\}$ seien $b = \mathbf{Add}_M(d, a)$ und $c = \mathbb{1}(b, a)$.
Dann ist $\mathbf{Add}_{M+1}(d, a) = \mathrm{sub}_{M+1}(b, c)$.

(**) Für $a, d \in \{0,1, \ldots, M\}$ seien $b = \mathbf{Add}_{M+1}(d, a)$ und $c = \mathbb{1}(b\ a)$.
Dann ist $\mathbf{Add}_M(d, a) = \mathbf{Add}_M(b, c)$.

Aus den Beobachtungen (*) und (**) läßt sich ableiten, daß das Vergleichsergebnis c signifikant von dem geheimzuhaltenden Wert *d* abhängt. Es besteht somit das Problem, $\mathbf{Sub}_{M+1}$ (*b*, *c*) bzw. $\mathbf{Add}_M(b, c)$ so zu berechnen, daß keine Korrelation zwischen dem geheimen Wert *d* und den Zwischenergebnissen und/ oder den sich bei den einzelnen Rechenschritten ergebenden Zustandsbits eines Prozessors besteht.

Falls die Berechnung von $\mathbb{1}(b, a)$ durch einen DPA-sicheren Vergleichsbefehl des Prozessors unterstützt wird, kann der Maskierungsregelübergang in beide Richtungen gemäß den Beobachtungen (*) und (**) erfolgen. Dabei werden vorzugsweise, abhängig von einem Zufallsbit, die Werte komplementiert oder nicht-komplementiert verwendet.

Vorliegend soll aber angenommen werden, daß der Stromverbrauch des Prozessors bei der Ausführung eines Vergleichsbefehls von dem Vergleichsergebnis bzw. der Differenz *b-a* abhängt. Die im vorliegenden und dem folgenden Abschnitt beschriebenen Verfahren leisten den Maskierungsregelübergang für Moduluswerte der Form $M = 2^L$, $L$ in $\mathbb{N}$, auf DPA-sichere Weise. Solche Moduluswerte sind in der Praxis üblich; häufig gilt $L = 8$ oder $L = 16$ oder $L = 32$. Der Speicherbedarf der Verfahren ist moderat.

Das im vorliegenden Abschnitt beschriebene Verfahren erhält als Eingabeparameter drei Werte *x, y* und *u,* wobei y eine maskierte Repräsentation eines geheimen Wertes $d \in \mathrm{V}(L)$ mit der $\mathbf{Add}_M$-Maskierungsregel und einer Maske *x* ist; es gilt also $x +_M d = y$. Der Wert $u \in \{0,1, ..., M\} \subset \mathrm{V}(L+1)$ gibt die Maske an, bezüglich derer die neu zu berechnende maskierte Repräsentation nach dem Maskierungsregelübergang ausgedrückt sein soll. Als Ausgabe erzeugt das Verfahren einen Wert $\upsilon \in \mathrm{V}(L+1)$, der die maskierte Repräsentation des geheimen Wertes *d* mit der $\mathbf{Add}_{M+1}$ -Maskierungsregel und der Maske *u* darstellt; es gilt also $u +_{M+1} d = v$.

In den vorbereitenden Verfahrensschritten (D.a) - (D.c) wird wiederum eine Vergleichstabelle C erzeugt, in deren Berechnung ein zufällig gewählter Verschleierungsparameter *z* und ein zufällig gewählter Maskierungswert *r* eingehen. Bei der Implementierung wurde hierbei ein "kleiner" Teiler 1 von L festgelegt, z.B. (*L, l*) = (32, 8), (16, 8), (16, 4). Der Wert *L/l* wird im folgenden mit *k* bezeichnet. Der maximale Wert des Tabellenindex *i* lautet *m* mit $m = 2^l$; die Vergleichstabelle C weist *m*+1 Einträge zu je einem Bit auf:

(D.a) Wähle ein Zufallsbit $z \in \{0,1\}$ als Verschleierungsparameter.

(D.b) Wähle eine Zufallszahl $r \in \mathrm{V}(l)$ als Maskierungswert und setze $a = (\overbrace{r \mid ... \mid r}^{k}) \in \mathrm{V}(L)$.

(D.c) Erzeuge die Vergleichstabelle C[0, ..., *m*] mit:

$$C(0) = 1$$

und

$$C(i) = \mathbb{1}\,(i-1,\, r \oplus_l (\overbrace{z|...|z}^{l})) \quad \text{für } i = 1, ..., m.$$

Der Maskierungsregelübergang wird durch die folgenden Schritte (D.1) - (D.9) ausgeführt. Hierbei wird in Schritt (D.1) eine maskierte Repräsentation **b** des Wertes *d* mit der Maske *a* berechnet. Die Schritte (D.4) und (D.5) bilden eine Schleife, in deren Verlauf der Vergleichswert *c*, ausgedrückt in verschleierter Form als *c*' mit $c' = c \oplus_1 z$, berechnet wird. In den Schritten (D.6) - (D.8) wird der Übergang zur Maskierungsregel $\mathbf{Add}_{M+1}$ gemäß Beobachtung (*) vollzogen, indem der Wert $\mathbf{Sub}_{M+1}$ (*b*, *c*) verschleiert berechnet wird. In Schritt (D.9) wird unter Beibehaltung der $\mathbf{Add}_{M+1}$ -Maskierungsregel die Maske *a* in die gewünschte Maske *u* umgewandelt:

(D.1) Berechne aus *x, y* und *a* den Wert $b = \mathbf{Add}_M(d, a)$.

(D.2) Setze $b' = b \oplus_L (\overbrace{z|...|z}^{L})$; es sei $b' = (b'_k \mid ... \mid b'_1)$.

(D.3) Setze $c' = z$.

(D.4) Für $j = 1, ..., k$ führe eine Schleife mit Schritt (D.5) aus:

(D.5) Setze $c' = C(b'_j + 1 - c')$.

(D.6) Setze $u' = u$, falls $z = 0$, und $u' = \mathbf{Sub}_{M+1}(M+1, u)$, falls $z = 1$.

(D.7) Berechne $u' = \mathbf{Sub}_{M+1}(u', c')$.
(D.8) Setze $u' = u'$, falls $z = 0$, und $u' = \mathrm{sub}_{M+1}(M, u')$, falls $z = 1$.
(D.9) Berechne $\upsilon = \mathbf{Sub}_{M+1}(\mathbf{Add}_{M+1}(u', b), a)$.

Ähnlich wie bei den Verfahren gemäß den Abschnitten B und C ist es auch bei dem vorliegenden Verfahren ratsam, die Berechnung von $(b'_k \mid ... \mid b'_1)$ in den Schritten (D.1), (D.2) und/ oder von $\upsilon = (\upsilon_k \mid ... \mid \upsilon_1)$ in Schritt (D.9) für jedes $b'_j$ bzw. $\upsilon_k$ einzeln auszuführen. Dies kann auch innerhalb der durch die Schritte (D.4) und (D.5) gebildeten Schleife erfolgen.

Bei der verschleierten Berechnung von $\mathbf{Sub}_{M+1}(b, c)$ in den Schritten (D.6) - (D.8) erfolgt eine Subtraktion von *c* von *u*, welches dann auf *b* addiert wird. Hierbei wird der Zusammenhang $c = c' \oplus_1 z$ genutzt. Es sollte darauf geachtet werden, daß *c* nicht unmaskiert behandelt wird und daß auch keine anderen Abhängigkeiten zwischen *z* und *c*' auftreten.

Alle Berechnungen können problemlos so implementiert werden, daß es keine von Daten oder Zufallszahlen abhängigen Fallunterscheidungen gibt. Wird im Zuge des kryptographischen Verfahrens auch ein Maskierungsregelwechsel von $\mathbf{Add}_M$ nach $\mathbf{Xor}_L$ benötigt und wurde hierfür eines der in Abschnitt B oder Abschnitt C beschriebenen Verfahren eingesetzt, so liegt dadurch bei gleicher Wahl der Parameters *l* die Tabelle C bis auf den ersten Eintrag, der hinzuzufügen ist, bereits vor.

Bei sorgfältiger Implementierung beugt das Verfahren DPA-Angriffen vor, da alle Werte *c*' und die während des Berechnungsablaufs gesetzten und gelöschten Zustandsbits des Prozessors von dem zu schützenden Wert *d* unabhängig sind.

Alternativ zur einmaligen Erzeugung des Zufallsbits *z* als Verschleierungsparameter in dem vorbereitenden Schritt (D.a) kann der Verschleierungsparameter *z* auch erst bei jeder Maskierungsregelumwandlung erneut zufällig gewählt werden. Die hierzu nötigen Modifikationen werden im folgenden Abschnitt E erläutert; sie sind entsprechend auch auf das im vorliegenden Abschnitt beschriebene Verfahren anwendbar.

## E. Wechsel von $\mathbf{Add}_{2^L+1}$ nach $\mathbf{Add}_{2^L}$

Das im vorliegenden Abschnitt beschriebene Verfahren führt eine Maskierungsregelumwandlung in einer zu dem Verfahren von Abschnitt D entgegengesetzten Richtung aus. Das vorliegende Verfahren nutzt die Beobachtung (**) des vorherigen Abschnitts D.

Es sei L in $\mathbb{N}$, und es gelte $M = 2^L$. Als Eingabewerte erhält das Verfahren die Werte *x*, *y* und *u*, wobei *y* eine maskierte Repräsentation eines geheimen Wertes $d \in \{0,1,..., M\} \subset V(L+1)$ mit der $\mathbf{Add}_{M+1}$ -Maskierungsregel und der Maske *x* ist; es gilt also $x +_{M+1} d = y$. Der Wert $u \in V(L)$ gibt die Maske der zu berechnenden maskierten Repräsentation an. Als Ausgabe erzeugt das Verfahren einen Wert $v \in V(L)$, für den $u +_M d = v$ gilt. Mit anderen Worten ist *v* die maskierte Repräsentation des geheimen Wertes *d* mit der $\mathbf{Add}_M$-Maskierungsregel und der Maske *u*.

Das Verfahren wird hier unter Verwendung von Parametern *l*, *k* und *m* beschrieben, deren Werte in der Regel schon bei der Implementierung des Verfahrens festgelegt wurden. Der Wert *l* ist ein "kleiner" Teiler von *L*, z.B. $(L, l) = (32, 8)$, (16, 8) oder (16, 4). Die Werte *k* und *m* sind durch $k = L/l$ und $m = 2^l$ gegeben. In vorbereitenden Schritten (E.a) und (E.b) des Verfahrens wird eine Vergleichstabelle C für einen zufällig gewählten Maskierungswert *r* erzeugt:

(E.a) Wähle eine Zufallszahl $r \in V(l)$ als Maskierungswert.
(E.b) Erzeuge die Tabelle C[0, ..., *m*] mit:

$$C(0) = 1$$

und

$$C(i) = \mathbb{1}(i-1, r) \quad \text{für } i = 1, ..., m.$$

Der Maskierungsregelübergang wird durch die folgenden Schritte (E.1) - (E.11) ausgeführt. In Schritt (E.1) wird ein Verschleierungsparameter *z* bestimmt, der auch die folgenden Berechnungsvorgänge beeinflußt. In Schritt (E. 3) wird eine maskierte Repräsentation *b* des Wertes *d* mit einer aus *r* und *z* gebildeten Maske *a* berechnet. Die Schritte (E.6) und (E.7) bilden eine Schleife, in deren Verlauf der Vergleichswert *c*, ausgedrückt in verschleierter Form als *c*', berechnet wird. In den Schritten (E.8) - (E.10) wird der Übergang zur Maskierungsregel $\mathbf{Add}_M$ gemäß Beobachtung (**) vollzogen, indem der Wert $\mathbf{Add}_M(b, c)$ verschleiert berechnet wird. In Schritt (E.11) wird unter Beibehaltung der $\mathbf{Add}_M$-Maskierungsregel die Maske $a$ in die gewünschte Maske $u$ umgewandelt:

(E.1) Wähle ein Zufallsbit $z \in \{0,1\}$ als Verschleierungsparameter.

(E.2) Setze $r' = r \oplus_l \overbrace{(z \mid \ldots \mid z)}^{l} \in \mathrm{V}(l)$ und $a = (\overbrace{r' \mid \ldots \mid r'}^{k}) \in \mathrm{V}(L)$.

(E.3) Berechne aus $x$, $y$ und $a$ den Wert $b = \mathbf{Add}_{M+1}(a, d)$; es sei $b = (b_{k+1} \mid b_k \mid \ldots \mid b_1)$ mit $b_{k+1} \in \{0,1\}$ und $b_k, \ldots, b_1 \in \mathrm{V}(l)$.

(E.4) Setze $b' = (b_k \mid \ldots \mid b_1) \oplus_L (\overbrace{z|\ldots|z}^{L})$; es sei $b' = (b'_k \mid \ldots \mid b'_1)$.

(E.5) Setze $c' = z \oplus_1, b_{k+1}$.

(E.6) Für $j$ = 1,..., $k$ führe eine Schleife mit dem Schritt (E.7) aus:

(E.7) Setze $c' = \mathrm{C}\,(b'_j + 1 - c')$.

(E.8) Setze $u' = u$, falls $z = 0$, und $u' = \mathbf{Sub}_M(M\text{-}1, u)$, falls $z$ =1.

(E.9) Berechne $u' = \mathbf{Add}_M(u', c' \oplus_1 b_{k+1})$.

(E.10) Setze $u' = u'$, falls $z = 0$, und $u' = \mathbf{Sub}_M(M, u')$, falls $z$ =1.

(E.11) Berechne $\upsilon = \mathrm{Sub}_M\,(\mathrm{Add}_M(u', b), a)$.

Ähnlich wie bei den Verfahren gemäß den Abschnitten B und C ist es auch bei dem vorliegenden Verfahren ratsam, die Berechnung von $(b'_k|\ldots|b'_1)$ in den Schritten (E.3), (E.4) und/oder von $\upsilon = (\upsilon_k \mid \ldots \mid \upsilon_1)$ in Schritt (E.11) für jedes $b'_j$ bzw. $\upsilon_k$ einzeln auszuführen. Dies kann auch innerhalb der durch die Schritte (E.6) und (E.7) gebildeten Schleife erfolgen.

Bei der verschleierten Berechnung von $\mathbf{Add}_M(b, c)$ in den Schritten (E.8) - (E.10) erfolgt eine Addition von $c$ zu $u$, welches dann auf $b$ addiert wird. Hierbei wird der Zusammenhang $c = c' \oplus_1 b_{k+1} \oplus_1 z$ genutzt. Es sollte darauf geachtet werden, daß $c$ nicht unmaskiert behandelt wird und daß auch keine anderen Abhängigkeiten zwischen $z$ und $\tilde{c}$ auftreten.

Alle Berechnungen können problemlos so implementiert werden, daß es keine von Daten oder Zufallszahlen abhängigen Fallunterscheidungen gibt. Wird im Zuge des kryptographischen Verfahrens auch ein Maskierungsregelwechsel von $\mathbf{Add}_M$ nach $\mathbf{Xor}_L$ benötigt und wurde hierfür eines der in Abschnitt B oder Abschnitt C beschriebenen Verfahren eingesetzt, so liegt dadurch bei gleicher Wahl der Parameters $l$ die Tabelle C bis auf den ersten Eintrag, der hinzuzufügen ist, bereits vor.

In einer Ausführungsalternative kann man Schritt (E.8) als $u' = u \oplus_L (\overbrace{z|\ldots|z}^{L})$ implementieren; eine entsprechende Abwandlung ist auch für das in Abschnitt D beschriebene Verfahren möglich.

Bei dem hier dargestellten Verfahren wird in Schritt (E.1) der Verschleierungsparameter $z$ als Zufallsbit bei jeder Maskenumwandlung neu gewählt. Diese Technik kann analog bei dem Verfahren gemäß Abschnitt D angewendet werden. Andererseits kann auch die in Abschnitt D beschriebene Technik, den Verschleierungsparameter $z$ schon bei den vorbereitenden Schritten zufällig zu wählen und in die Vergleichstabelle C einfließen zu lassen, in einer Ausführungsalternative des vorliegend beschriebenen Verfahrens verwendet werden.

### F. Wechsel von $\mathbf{Add}_{2L}$ nach I (-)

Die Abschnitte F und G betreffen den Übergang zwischen der $\mathbf{Add}_{2L}$-Maskierungsregel und einer Maskierungsregel, die hier als I(-)-Maskierungsregel bezeichnet wird: Dieser Übergang wird insbesondere für das IDEA-Verfahren und die eingangs definierte IDEA-Multiplikation benötigt.

Für $M$ in $\mathbb{N}$ sei die Transformation $\mathrm{I}_M$: $\{0,1, \ldots, M\text{-}1\} \rightarrow \{1, 2, 3, \ldots, M\}$ definiert durch $\mathrm{I}_M(0) = M$ und $\mathrm{I}_M(d) = d$ für $d$ # 0. Für $M = 2^{16}$ entspricht $\mathrm{I}_M$ der eingangs definierten I-Transformation des IDEA-Verfahrens. Der Einfachheit halber wird im folgenden lediglich die Bezeichnung I statt $\mathrm{I}_M$ verwendet.

Gemäß der I(-)-Maskierungsregel wird der zu schützende Wert $d$ durch eine maskierte Repräsentation $y$ mit einer üblicherweise zufällig gewählten Maske $x$ dargestellt, so daß $y = \mathbf{Add}_{M+1}(x, \mathrm{I}(d))$ gilt.

Die in den Abschnitten F und G dargestellten Übergangsverfahren basieren auf den beiden folgenden Beob-

achtungen für M in $\mathbb{N}$, die ähnlich zu den beiden oben bereits gegebenen Beobachtungen (*) und (**) sind:

(***) Für $a$, $d \in \{0,1, ..., M\text{-}1\}$ seien $b = \mathbf{Add}_M(d, a)$ und $c = \mathbb{1}(b\text{-}1, a)$.
Dann ist $\mathbf{Add}_{M+1}(\mathrm{I}(d), a) = \mathbf{Sub}_{M+1}(b, c)$.

(****) Für $a \in \{0,1, ..., M\}$ und $d \in \{0,1, ..., M\text{-}1\}$ seien $b = \mathbf{Add}_{M+1}(\mathrm{I}(d), a)$ und $c = \mathbb{1}(b\text{-}1, a)$. Dann ist $\mathbf{Add}_M(d, a) = \mathbf{Add}_M(b, c)$.

Ähnlich wie in den obigen Abschnitten D und E besteht also auch hier das Problem, $\mathbf{Sub}_{M+1}(b, c)$ bzw. $\mathbf{Add}_M(b, c)$ auf DPA-sichere Weise zu berechnen.

Das im vorliegenden Abschnitt beschriebene Verfahren ist für $M = 2^L$ vorgesehen. Es erhält als Eingabeparameter drei Werte $x$, $y$ und $u$, wobei $y$ eine maskierte Repräsentation eines geheimen Wertes $d \in \mathrm{V}(L)$ mit der $\mathbf{Add}_M$-Maskierungsregel und einer Maske x ist; es gilt also $x +_M d = y$. Der Wert $u \in \{0,1, ..., M\} \subset \mathrm{V}(L+1)$ gibt die Maske an, bezüglich derer die neu zu berechnende maskierte Repräsentation nach dem Maskierungsregelübergang ausgedrückt sein soll. Als Ausgabe erzeugt das Verfahren einen Wert $\upsilon \in \mathrm{V}(L+1)$, der die maskierte Repräsentation des geheimen Wertes $d$ mit der I(-)-Maskierungsregel und der Maske $u$ darstellt; es gilt also $u +_{M+1} \mathrm{I}(d) = \upsilon$.

Das Verfahren weist die vorbereitenden Schritte (F.a) und (F.b) sowie die Schritte (F.1) - (F.11) zum Maskierungsregelübergang auf. Wegen der Ähnlichkeit der Beobachtungen (*) und (***) ist das vorliegende Verfahren dem in Abschnitt D beschriebenen sehr ähnlich. Der durch die I (-) -Maskierungsregel verursachte Unterschied liegt lediglich in Schritt (F.5), der gegenüber Schritt (D.3) abgeändert ist.

Als weiterer Unterschied zu dem in Abschnitt D beschriebenen Verfahren wird der Verschleierungsparameter $z$ beim vorliegenden Verfahren nicht nur einmal in einem vorbereitenden Verfahrensschritt, sondern bei jeder Maskierungsregelumwandlung erneut zufällig berechnet. Diese Möglichkeit war bereits in Abschnitt D als Ausführungsalternative des dort beschriebenen Verfahrens erwähnt worden, und das vorliegende Verfahren kann als Muster für die erforderlichen Änderungen dienen. Natürlich kann auch das vorliegende Verfahren, ähnlich wie in Abschnitt D oder auch im folgenden Abschnitt G beschrieben, so abgewandelt werden, daß die Bestimmung des Verschleierungsparameters $z$ in die vorbereitenden Schritte vorgezogen wird.

Das Verfahren wird hier unter Verwendung von Parametem $l$, $k$ und $m$ beschrieben, deren Werte in der Regel schon bei der Implementierung des Verfahrens festgelegt wurden. Der Wert $l$ ist ein "kleiner" Teiler von $L$, z.B. $(L, l) = (16, 8)$ oder $(16, 4)$. Die Werte $k$ und $m$ sind durch $k = L/l$ und $m = 2^l$ gegeben. Die vorbereitenden Verfahrensschritte (F.a) und (F.b) sind:

(F.a) Wähle eine Zufallszahl $r \in \mathrm{V}(l)$ als Maskierungswert.
(F.b) Erzeuge die Vergleichstabelle C[0, ...,$m$] mit:

$$\mathrm{C}(0) = 1$$

und

$$\mathrm{C}(i) = \mathbb{1}(i\text{-}1, r) \quad \text{für } i = 1, ..., m.$$

Zum Maskierungsregelübergang werden die folgenden Schritte (F.1) - (F.11) ausgeführt:

(F.1) Wähle ein Zufallsbit $z \in \{0,1\}$ als Verschleierungsparameter.

(F.2) Setze $r' = r \oplus_l (\overbrace{z \mid ... \mid z}^{l})$ und $a = (\overbrace{r' \mid ... \mid r'}^{k}) \in \mathrm{V}(L)$.

(F.3) Berechne aus $x$, $y$ und $a$ den Wert $b = \mathbf{Add}_M(a, d)$.

(F.4) Setze $b' = b \oplus_L (\overbrace{z \mid ... \mid z}^{L})$; es sei $b' = (b'_k \mid ... \mid b'_1)$.

(F.5) Setze $c' = 1 - z$.

(F.6) Für $j = 1, ..., k$ führe eine Schleife mit Schritt (F.7) aus:

(F.7) Setze $c' = C(b'_j + 1 - c')$.

(F.8) Setze $u' = u$, falls $z = 0$, und $u' = \mathbf{Sub}_{M+1}(M+1, u)$, falls $z = 1$.
(F.9) Berechne $u' = \mathbf{Sub}_{M+1}(u', c')$.
(F.10) Setze $u' = u'$, falls $z = 0$, und $u' = \mathbf{Sub}_{M+1}(M, u')$, falls $z = 1$.
(F.11) Berechne $\upsilon = \mathbf{Sub}_{M+1}(\mathbf{Add}_{M+1}(u', b), a)$.

Für das hier beschriebene Verfahren gelten die in Abschnitt D gegebenen Hinweise und Anmerkungen entsprechend.

**G. Wechsel von I (-) nach $\mathbf{Add}_{2^L}$**

Das im vorliegenden Abschnitt beschriebene Verfahren führt eine Maskierungsregelumwandlung in einer zu dem Verfahren von Abschnitt F entgegengesetzten Richtung aus. Das vorliegende Verfahren nutzt die Beobachtung (****) des vorherigen Abschnitts F.

Es sei L in $\mathbb{N}$, und es gelte $M = 2^L$. Als Eingabewerte erhält das Verfahren die Werte *x, y* und *u*, wobei *y* eine maskierte Repräsentation eines geheimen Wertes $d \in V(L)$ mit der I(-)-Maskierungsregel und der Maske *x* ist; es gilt also $I(d) +_{M+1} x = y$. Der Wert $u \in V(L)$ gibt die Maske der zu berechnenden maskierten Repräsentation an. Als Ausgabe erzeugt das Verfahren einen Wert $\upsilon \in V(L)$, für den $u +_M d = \upsilon$ gilt. Mit anderen Worten ist $\upsilon$ die maskierte Repräsentation des geheimen Wertes *d* mit der $\mathbf{Add}_M$-Maskierungsregel und der Maske *u*.

Das Verfahren weist die vorbereitenden Schritte (G.a) - (G.c) und die Schritte (G.1) - (G.9) zum Maskierungsregelübergang auf. Wegen der Ähnlichkeit der Beobachtungen (**) und (****) ist das vorliegende Verfahren dem in Abschnitt E beschriebenen sehr ähnlich. Der durch die I(-)-Maskierungsregel verursachte Unterschied liegt lediglich in den Schritten (G.1) und (G.3) die gegenüber den entsprechenden Schritten (E.3) und (E.5) abgeändert sind.

Als weiterer Unterschied zu dem in Abschnitt E beschriebenen Verfahren wird der Verschleierungsparameter *z* beim vorliegenden Verfahren nicht bei jeder Maskierungsregelumwandlung, sondern nur einmal in dem vorbereitenden Verfahrensschritt (G.a) zufällig berechnet. Diese Möglichkeit war bereits in Abschnitt E als Ausführungsaltemative des dort beschriebenen Verfahrens erwähnt worden, und das vorliegende Verfahren kann als Muster für die erforderlichen Änderungen dienen. Natürlich kann auch das vorliegende Verfahren, ähnlich wie in Abschnitt E oder auch im vorhergehenden Abschnitt F beschrieben, so abgewandelt werden, daß die Bestimmung des Verschleierungsparameters *z* in die eigentliche Maskierungsregelumwandlung aufgenommen wird.

Das Verfahren wird hier unter Verwendung von Parametern *l, k* und *m* beschrieben, deren Werte in der Regel schon bei der Implementierung des Verfahrens festgelegt wurden. Der Wert *l* ist ein "kleiner" Teiler von *L*, z.B. $(L, l) = (16, 8)$ oder $(16, 4)$. Die Werte *k* und *m* sind durch $k = L/l$ und $m = 2^l$ gegeben. Die vorbereitenden Verfahrensschritte (G.a) - (G.c) sind:

(G.a) Wähle ein Zufallsbit $z \in \{0,1\}$ als Verschleierungsparameter.

(G.b) Wähle eine Zufallszahl $r \in V(l)$ als Maskierungswert und setze $a = (\overbrace{r|\ldots|r}^{k}) \in V(L)$.

(G.c) Erzeuge die Tabelle C[0, ..., *m*] mit:

$$C(0) = 1$$

und

$$C(i) = \mathbb{1}\,(i-1, r \oplus_l (\overbrace{z|\ldots|z}^{l}))\quad \text{für } i = 1, \ldots, m.$$

Zum Maskierungsregelübergang werden die folgenden Schritte (G.1) - (G.9) ausgeführt:

(G.1) Berechne aus *x, y* und *a* den Wert $b = \mathbf{Add}_{M+1}(I(d), a)$;
es sei $b = (b_{k+1}| b_k |\ldots| b_1)$ mit $b_{k+1} \in \{0,1\}$ und $b_k, \ldots, b_1 \in V(l)$.

(G.2) Setze $b' = (b_k | \dots | b_1) \oplus_L (\overbrace{z|\dots|z}^{L})$; es sei $b' = (b'_k | \dots | b'_1)$.

(G.3) Setze $c' = 1 - z$.

(G.4) Für $j = 1, \dots, k$ führe eine Schleife mit dem Schritt (G.5) aus:

(G.5) Setze $c' = C(b'_j + 1 - c')$.

(G.6) Setze $u' = u$, falls $z = 0$, und $u' = \mathbf{Sub}_M(M-1, u)$, falls $z = 1$.

(G.7) Berechne $u' = \mathbf{Add}_M(u', c' \oplus_1 b_{k+1})$.

(G.8) Setze $u' = u'$, falls $z = 0$, und $u' = \mathbf{Sub}_M(M, u')$, falls $z = 1$.

(G.9) Berechne $\upsilon = \mathbf{Sub}_M(\mathbf{Add}_M(u', b), a)$.

Für das hier beschriebene Verfahren gelten die in Abschnitt E gegebenen Hinweise und Anmerkungen entsprechend.

Aus dem in den folgenden Tabellen 1 bis 4 gegebenen Beispiel wird deutlich, daß für das vorliegend beschriebene Verfahren alle Werte *u'* und alle während des Berechnungsverlaufs auftretenden Zustandsbitwerte eines Prozessors von dem geheimen Wert *d* unabhängig sind. Das Verfahren ist daher bei sorgfältiger Implementierung gegen einen DPA-Angriff gesichert.

Die in den obigen Abschnitten A - G erwähnten Einzelheiten sollen nicht als Einschränkungen des Schutzbereichs der Erfindung aufgefaßt werden, sondern vielmehr als Beispiele von bevorzugten Ausführungsformen dienen. Viele andere Abwandlungen sind möglich und für den Fachmann offensichtlich. So lassen sich die beschriebenen Verfahren z.B. leicht so abändern, daß sie für die eingangs bereits erwähnte $\mathbf{Sub}_M$-Maskierungsregel statt der $\mathbf{Add}_M$-Maskierungsregel einsetzbar sind. Ferner sind die oben im Zusammenhang mit einem Übergangsverfahren beschriebenen Abwandlungen und Anmerkungen in der Regel auch auf die anderen Verfahren entsprechend anwendbar. Der Bereich der Erfindung soll deshalb nicht durch die dargestellten Ausführungsbeispiele bestimmt werden, sondern durch die anhängenden Ansprüche und ihre Äquivalente.

Tabelle 1: Beispiel für I (-) nach $\mathbf{Add}_2^L$ mit $L = 4$, $l = 2$

| $z=0$, $a = (r\|r)$ | | | | | | | | | | |
|---|---|---|---|---|---|---|---|---|---|---|
| d | $r = r' = 0$, $a = 00$ | | | | | $r = r' = 1$, $a = 11$ | | | | |
| | b | c | b' | $c'_0$ | $c'_1$ | b | c | b' | $c'_0$ | $c'_1$ |
| 00 | 00 | 1 | 0\|0 | 1 | 1 | 11 | 1 | 1\|1 | 1 | 1 |
| 01 | 01 | 0 | 0\|1 | 0 | 0 | 12 | 0 | 1\|2 | 0 | 0 |
| 02 | 02 | 0 | 0\|2 | 0 | 0 | 13 | 0 | 1\|3 | 0 | 0 |
| 03 | 03 | 0 | 0\|3 | 0 | 0 | 20 | 0 | 2\|0 | 1 | 0 |
| 10 | 10 | 0 | 1\|0 | 1 | 0 | 21 | 0 | 2\|1 | 1 | 0 |
| 11 | 11 | 0 | 1\|1 | 0 | 0 | 22 | 0 | 2\|2 | 0 | 0 |
| 12 | 12 | 0 | 1\|2 | 0 | 0 | 23 | 0 | 2\|3 | 0 | 0 |
| 13 | 13 | 0 | 1\|3 | 0 | 0 | 30 | 0 | 3\|0 | 1 | 0 |
| 20 | 20 | 0 | 2\|0 | 1 | 0 | 31 | 0 | 3\|1 | 1 | 0 |
| 21 | 21 | 0 | 2\|1 | 0 | 0 | 32 | 0 | 3\|2 | 0 | 0 |
| 22 | 22 | 0 | 2\|2 | 0 | 0 | 33 | 0 | 3\|3 | 0 | 0 |
| 23 | 23 | 0 | 2\|3 | 0 | 0 | 100 | 0 | 0\|0 | 1 | 1 |
| 30 | 30 | 0 | 3\|0 | 1 | 0 | 00 | 1 | 0\|0 | 1 | 1 |
| 31 | 31 | 0 | 3\|1 | 0 | 0 | 01 | 1 | 0\|1 | 1 | 1 |
| 32 | 32 | 0 | 3\|2 | 0 | 0 | 02 | 1 | 0\|2 | 0 | 1 |
| 33 | 33 | 0 | 3\|3 | 0 | 0 | 03 | 1 | 0\|3 | 0 | 1 |
| 100 | 100 | 0 | 0\|0 | 1 | 1 | 10 | 1 | 1\|0 | 1 | 1 |

Tabelle 2: Beispiel für I (-) nach $Add_{2L}$ mit $L = 4$, $l = 2$

| *z* = 0, *a* = (*r*\|*r*) | | | | | | | | | | |
|---|---|---|---|---|---|---|---|---|---|---|
| *d* | *r* = *r'* = 2, *a* = 22 | | | | | *r* = *r'* = 3, *a* = 33 | | | | |
| | *b* | *c* | *b'* | $c'_0$ | $c'_1$ | *b* | *c* | *b'* | $c'_0$ | $c'_1$ |
| 00 | 22 | 1 | 2\|2 | 1 | 1 | 33 | 1 | 3\|3 | 1 | 1 |
| 01 | 23 | 0 | 2\|3 | 0 | 0 | 100 | 0 | 0\|0 | 1 | 1 |
| 02 | 30 | 0 | 3\|0 | 1 | 0 | 00 | 1 | 0\|0 | 1 | 1 |
| 03 | 31 | 0 | 3\|1 | 1 | 0 | 01 | 1 | 0\|1 | 1 | 1 |
| 10 | 32 | 0 | 3\|2 | 1 | 0 | 02 | 1 | 0\|2 | 1 | 1 |
| 11 | 33 | 0 | 3\|3 | 0 | 0 | 03 | 1 | 0\|3 | 1 | 1 |
| 12 | 100 | 0 | 0\|0 | 1 | 1 | 10 | 1 | 1\|0 | 1 | 1 |
| 13 | 00 | 1 | 0\|0 | 1 | 1 | 11 | 1 | 1\|1 | 1 | 1 |
| 20 | 01 | 1 | 0\|1 | 1 | 1 | 12 | 1 | 1\|2 | 1 | 1 |
| 21 | 02 | 1 | 0\|2 | 1 | 1 | 13 | 1 | 1\|3 | 1 | 1 |
| 22 | 03 | 1 | 0\|3 | 0 | 1 | 20 | 1 | 2\|0 | 1 | 1 |
| 23 | 10 | 1 | 1\|0 | 1 | 1 | 21 | 1 | 2\|1 | 1 | 1 |
| 30 | 11 | 1 | 1\|1 | 1 | 1 | 22 | 1 | 2\|2 | 1 | 1 |
| 31 | 12 | 1 | 1\|2 | 1 | 1 | 23 | 1 | 2\|3 | 1 | 1 |
| 32 | 13 | 1 | 1\|3 | 0 | 1 | 30 | 1 | 3\|0 | 1 | 1 |
| 33 | 20 | 1 | 2\|0 | 1 | 1 | 31 | 1 | 3\|1 | 1 | 1 |
| 100 | 21 | 1 | 2\|1 | 1 | 1 | 32 | 1 | 3\|2 | 1 | 1 |

Tabelle 3: Beispiel für I (-) nach $Add_2^L$ mit $L = 4$, $l = 2$

| *z* = 1, *a* = (*r'*\|*r'*) | | | | | | | | | | |
|---|---|---|---|---|---|---|---|---|---|---|
| *d* | *r* = 3, *r'* = 0, *a* = 00 | | | | | *r* = 2, *r'* = 1, *a* = 11 | | | | |
| | *b* | *c* | *b'* | $c'_0$ | $c'_1$ | *b* | *c* | *b'* | $c'_0$ | $c'_1$ |
| 00 | 00 | 1 | 3\|3 | 0 | 0 | 11 | 1 | 2\|2 | 0 | 0 |
| 01 | 01 | 0 | 3\|2 | 1 | | 12 | 0 | 2\|1 | 1 | 1 |
| 02 | 02 | 0 | 3\|1 | 1 | 1 | 13 | 0 | 2\|0 | 1 | 1 |
| 03 | 03 | 0 | 3\|0 | 1 | 1 | 20 | 0 | 1\|3 | 0 | 1 |
| 10 | 10 | 0 | 2\|3 | 0 | 1 | 21 | 0 | 1\|2 | 0 | 1 |
| 11 | 11 | 0 | 2\|2 | 1 | 1 | 22 | 0 | 1\|1 | 1 | 1 |
| 12 | 12 | 0 | 2\|1 | 1 | 1 | 23 | 0 | 1\|0 | 1 | 1 |
| 13 | 13 | 0 | 2\|0 | 1 | 1 | 30 | 0 | 2\|3 | 0 | 1 |
| 20 | 20 | 0 | 1\|3 | 0 | 1 | 31 | 0 | 0\|2 | 0 | 1 |
| 21 | 21 | 0 | 1\|2 | 1 | 1 | 32 | 0 | 0\|1 | 1 | 1 |
| 22 | 22 | 0 | 1\|1 | 1 | 1 | 33 | 0 | 0\|0 | 1 | 1 |
| 23 | 23 | 0 | 1\|0 | 1 | 1 | 100 | 0 | 3\|3 | 0 | 0 |
| 30 | 30 | 0 | 0\|3 | 0 | 1 | 00 | 1 | 3\|3 | 0 | 0 |

(fortgesetzt)

| $z = 1$, $a = (r'\|r')$ | | | | | | | | | | |
|---|---|---|---|---|---|---|---|---|---|---|
| $d$ | $r = 3$, $r' = 0$, $a = 00$ | | | | | $r = 2$, $r' = 1$, $a = 11$ | | | | |
| | $b$ | $c$ | $b'$ | $c'_0$ | $c'_1$ | $b$ | $c$ | $b'$ | $c'_0$ | $c'_1$ |
| 31 | 31 | 0 | 0\|2 | 1 | 1 | 01 | 1 | 3\|2 | 0 | 0 |
| 32 | 32 | 0 | 0\|1 | 1 | 1 | 02 | 1 | 3\|1 | 1 | 0 |
| 33 | 33 | 0 | 0\|0 | 1 | 1 | 03 | 1 | 3\|0 | 1 | 0 |
| 100 | 100 | 0 | 3\|3 | 0 | 0 | 10 | 1 | 2\|3 | 0 | 0 |

Tabelle 4: Beispiel für I (-) nach $Add_{2L}$ mit $L = 4$, $l = 2$

| $z = 1$, $a = (r'\|r')$ | | | | | | | | | | |
|---|---|---|---|---|---|---|---|---|---|---|
| $d$ | $r = 1$, $r' = 2$, $a = 22$ | | | | | $r = 0$, $r' = 3$, $a = 33$ | | | | |
| | $b$ | $c$ | $b'$ | $c'_0$ | $c'_1$ | $b$ | $c$ | $b'$ | $c'_0$ | $c'_1$ |
| 00 | 22 | 1 | 1\|1 | 0 | 0 | 33 | 1 | 0\|0 | 0 | 0 |
| 01 | 23 | 0 | 1\|0 | 1 | 1 | 100 | 0 | 3\|3 | 0 | 0 |
| 02 | 30 | 0 | 0\|3 | 0 | 1 | 00 | 1 | 3\|3 | 0 | 0 |
| 03 | 31 | 0 | 0\|2 | 0 | 1 | 01 | 1 | 3\|2 | 0 | 0 |
| 10 | 32 | 0 | 0\|1 | 0 | 1 | 02 | 1 | 3\|1 | 0 | 0 |
| 11 | 33 | 0 | 0\|0 | 1 | 1 | 03 | 1 | 3\|0 | 0 | 0 |
| 12 | 100 | 0 | 3\|3 | 0 | 1 | 10 | 1 | 2\|3 | 0 | 0 |
| 13 | 00 | 1 | 3\|3 | 0 | 0 | 11 | 1 | 2\|2 | 0 | 0 |
| 20 | 01 | 1 | 3\|2 | 0 | 0 | 12 | 1 | 2\|1 | 0 | 0 |
| 21 | 02 | 1 | 3\|1 | 0 | 0 | 13 | 1 | 2\|0 | 0 | 0 |
| 22 | 03 | 1 | 3\|0 | 1 | 0 | 20 | 1 | 1\|3 | 0 | 0 |
| 23 | 10 | 1 | 2\|3 | 0 | 0 | 21 | 1 | 1\|2 | 0 | 0 |
| 30 | 11 | 1 | 2\|2 | 0 | 0 | 22 | 1 | 1\|1 | 0 | 0 |
| 31 | 12 | 1 | 2\|1 | 0 | 0 | 23 | 1 | 1\|0 | 0 | 0 |
| 32 | 13 | 1 | 2\|0 | 1 | 0 | 30 | 1 | 0\|3 | 0 | 0 |
| 33 | 20 | 1 | 1\|3 | 0 | 0 | 31 | 1 | 0\|2 | 0 | 0 |
| 100 | 21 | 1 | 1\|2 | 0 | 0 | 32 | 1 | 0\|1 | 0 | 0 |

## Patentansprüche

1. Computerimplementiertes Verfahren zum Übergang von einer ersten maskierten Repräsentation (*y*) eines geheim zu haltenden Wertes (*d*) zu einer zweiten maskierten Repräsentation ($\upsilon$) des Wertes (*d*), wobei eine Ausspähung des geheim zu haltenden Wertes (*d*) verhindert wird, wobei die erste maskierte Repräsentation (*y*) auf einer ersten Maskierungsregel mit einer ersten Maske (*x*) beruht und die zweite maskierte Repräsentation ($\upsilon$) auf einer zweiten Maskierungsregel mit einer zweiten Maske (*u*) beruht, und wobei bei der Berechnung der zweiten maskierten Repräsentation ($\upsilon$) mindestens eine vorab berechnete Tabelle (T, C) mit einer Vielzahl von Einträgen herangezogen wird und die Berechnung in Abhängigkeit von mindestens einem Verschleierungsparameter (*z*) erfolgt.

2. Verfahren nach Anspruch 1, **dadurch gekennzeichnet, daß** jeder Eintrag in der Tabelle bzw. in mindestens einer der Tabellen (T, C) von mindestens einem vorab festgelegten Maskierungswert (*r, s*) abhängt.

3. Verfahren nach Anspruch 2, **dadurch gekennzeichnet, daß** die Tabelle bzw. mindestens eine der Tabellen eine Vergleichstabelle (C) ist, die für jeden Tabellenindex (*i*) das Ergebnis eines Vergleichs zwischen einem von dem Tabellenindex (*i*) abhängigen Wert und einem von dem Maskierungswert bzw. mindestens einem der Maskierungswerte (*r, s*) abhängigen Wert angibt.

4. Computerimplementiertes Verfahren zum Übergang von einer ersten maskierten Repräsentation (*y*) eines geheim zu haltenden Wertes *(d*) zu einer zweiten maskierten Repräsentation (υ) des Wertes (*d*), wobei eine Ausspähung des geheim zu haltenden Wertes (*d*) verhindert wird, wobei die erste maskierte Repräsentation (*y*) auf einer ersten Maskierungsregel mit einer ersten Maske (*x*) beruht und die zweite maskierte Repräsentation (υ) auf einer zweiten Maskierungsregel mit einer zweiten Maske (*u*) beruht, mit dem Schritt, eine Berechnung unter Verwendung mindestens einer Vergleichstabelle (C) auszuführen, die für jeden Tabellenindex (*i*) das Ergebnis eines Vergleichs zwischen einem von dem Tabellenindex (*i*) abhängigen Wert und einem von mindestens einem Maskierungswert (*r, s*) abhängigen Wert angibt.

5. Verfahren nach Anspruch 3 oder Anspruch 4, **dadurch gekennzeichnet, daß** der von dem Maskierungswert bzw. mindestens einem der Maskierungswerte (*r, s*) abhängige Wert in Abhängigkeit von dem Verschleierungsparameter (*z*) bzw. mindestens einem der Verschleierungsparameter entweder von dem komplementierten oder dem nichtkomplementierten Maskierungswert (*r, s*) abhängt.

6. Verfahren nach einem der Ansprüche 3 bis 5, **dadurch gekennzeichnet, daß** jeder Eintrag in der Vergleichstabelle (C) einen Binärwert angibt.

7. Verfahren nach einem der Ansprüche 3 bis 6, **dadurch gekennzeichnet, daß** die Vergleichstabelle (C) mehrfach auf aufeinanderfolgende Abschnitte eines Zwischenergebnisses angewendet wird, um je einen Übertragswert zu bestimmen.

8. Verfahren nach einem der Ansprüche 1 bis 7, **dadurch gekennzeichnet, daß** bei der Bestimmung der zweiten maskierten Repräsentation (υ) mindestens ein Zwischenergebnis in Abhängigkeit von dem Verschleierungsparameter (*z*) bzw. mindestens einem der Verschleierungsparameter komplementiert oder nicht-komplementiert verwendet wird.

9. Verfahren nach einem der Ansprüche 1 bis 8, **dadurch gekennzeichnet, daß** ein Tabellenindex (*i*) der Tabelle bzw. mindestens einer der Tabellen (T, C) eine Bitlänge aufweist, die einen Bruchteil der Bitlänge der ersten und/oder der zweiten maskierten Repräsentation (*y*, υ) beträgt, und daß bei der Bestimmung der zweiten maskierten Repräsentation (υ) ein wiederholter Zugriff auf die Tabelle bzw. mindestens eine der Tabellen (T, C) erfolgt.

10. Verfahren nach einem der Ansprüche 1 bis 9, **dadurch gekennzeichnet, daß** das Verfahren die Schritte aufweist:

- Bestimmen einer dritten maskierten Repräsentation des geheim zu haltenden Wertes (*d*), wobei die dritte maskierte Repräsentation auf der ersten Maskierungsregel mit einer dritten Maske beruht,
- Umwandeln der dritten maskierten Repräsentation in eine vierte maskierte Repräsentation des geheim zu haltenden Wertes (*d*) unter Verwendung der Tabelle bzw. mindestens einer der Tabellen (T, C), wobei die vierte maskierte Repräsentation auf der zweiten Maskierungsregel mit einer vierten Maske beruht, und
- Bestimmen der zweiten maskierten Repräsentation (υ) des geheim zu haltenden Wertes (*d*) aus der vierten maskierten Repräsentation.

11. Verfahren nach einem der Ansprüche 1 bis 10, **dadurch gekennzeichnet, daß** die zweite Maske (*u*) frei wählbar ist.

12. Verfahren nach einem der Ansprüche 1 bis 11, **dadurch gekennzeichnet, daß** die Tabelle bzw. mindestens eine der Tabellen (T, C) vorgegeben ist oder in einem vorbereitenden Verfahrensschritt berechnet wird.

13. Verfahren nach einem der Ansprüche 1 bis 12, **dadurch gekennzeichnet, daß** die Werte von Zustandsbits eines Prozessors während der Ausführung des Verfahrens statistisch unabhängig von dem geheim zu haltenden Wert (*d*) sind.

14. Verfahren nach einem der Ansprüche 1 bis 13, **dadurch gekennzeichnet, daß** das Verfahren zum Schutz gegen SPA- und/oder DPA-Angriffe dient.

**15.** Computerprogrammprodukt mit einer Vielzahl von Programmbefehlen, die mindestens einen Prozessor dazu veranlassen, ein Verfahren nach einem der Ansprüche 1 bis 14 auszuführen.

**16.** Vorrichtung, insbesondere tragbarer Datenträger, mit mindestens einem Prozessor und mindestens einem Speicher, wobei die Vorrichtung dazu eingerichtet ist, ein Verfahren nach einem der Ansprüche 1 bis 14 auszuführen.

## Claims

**1.** A computer-implemented method for the transition from a first masked representation (*y*) of a value (*d*) to be kept secret to a second masked representation (υ) of the value (*d*), wherein the value (*d*) to be kept secret is prevented from being spied out, wherein the first masked representation (*y*) is based on a first masking rule having a first mask (*x*) and the second masked representation (υ) is based on a second masking rule having a second mask (*u*), and wherein, in calculating the second masked representation (υ), at least one previously calculated table (T, C) having a plurality of entries is used and the calculation is carried out dependent on at least one veiling parameter (*z*).

**2.** The method according to claim 1, **characterized in that** each entry in the table or each entry in at least one of the tables (T, C), respectively, is dependent on at least one predetermined masking value (*r, s*).

**3.** The method according to claim 2, **characterized in that** the table or at least one of the tables, respectively, is a comparison table (C) which for each table index (*i*), provides the result of a comparison between a value dependent on the table index (*i*) and a value dependent on the masking value or at least one of the masking values (*r, s*), respectively.

**4.** A computer-implemented method for the transition from a first masked representation (*y*) of a value (*d*) to be kept secret to a second masked representation (υ) of the value (*d*), wherein the value (*d*) to be kept secret is prevented from being spied out, wherein the first masked representation (*y*) is based on a first masking rule having a first mask (*x*) and the second masked representation (υ) is based on a second masking rule having a second mask (*u*), the method comprising the step of executing a calculation using at least one comparison table (C) which provides, for each table index (*i*), the result of a comparison between a value dependent on the table index (*i*) and a value dependent on at least one masking value (*r, s*).

**5.** The method according to claim 3 or claim 4, **characterized in that** the value dependent on the masking value or at least one of the masking values (*r, s*), respectively, depends either on the complemented or the non-complemented masking value (*r, s*), depending on the veiling parameter (*z*) or at least one of the veiling parameters, respectively.

**6.** The method according to any one of claims 3 to 5, **characterized in that** each entry in the comparison table (C) provides a binary value.

**7.** The method according to any one of claims 3 to 6, **characterized in that** the comparison table (C) is applied repeatedly to successive sections of an intermediate result, in order to determine respective carry values.

**8.** The method according to any one of claims 1 to 7, **characterized in that** in determining the second masked representation (υ), at least one intermediate result is used in a complemented or non-complemented way, depending on the veiling parameter (*z*) or at least one of the veiling parameters, respectively.

**9.** The method according to any one of claims 1 to 8, **characterized in that** a table index (*i*) of the table or of at least one of the tables (T, C), respectively, has a bit length which amounts to a fraction of the bit length of the first and/or the second masked representation (*y*, υ), and **in that** in determining the second masked representation (υ) repeated access takes place to the table or at least one of the tables (T, C), respectively.

**10.** The method according to any one of claims 1 to 9, **characterized in that** the method comprises the steps:

- determining a third masked representation of the value (*d*) to be kept secret, wherein the third masked representation is based on the first masking rule having a third mask;
- transforming the third masked representation into a forth masked representation of the value (*d*) to be kept secret using the table or at least one of the tables (T, C), respectively, wherein the fourth masked representation is based on the second masking rule having a fourth mask; and

- determining the second masked representation (υ) of the value (*d*) to be kept secret from the fourth masked representation.

**11.** The method according to any one of claims 1 to 10, **characterized in that** the second mask (*u*) is freely selectable.

**12.** The method according to any one of claims 1 to 11, **characterized in that** the table or at least one of the tables (T, C), respectively, is predetermined or is calculated in a preparatory method step.

**13.** The method according to any one of claims 1 to 12, **characterized in that**, while executing the method, the values of status bits of a processor are statistically independent from the value (*d*) to be kept secret.

**14.** The method according to any one of claims 1 to 13, **characterized in that** the method serves to protect against SPA and/or DPA attacks.

**15.** A computer program product having a plurality of program instructions which cause at least one processor to execute a method according to any one of claims 1 to 14.

**16.** A device, in particular a portable data carrier, having at least one processor and at least one memory, wherein the device is adapted for executing a method according to any one of claims 1 to 14.

**Revendications**

**1.** Procédé exécuté sur ordinateur pour le passage d'une première représentation masquée (y) d'une valeur à garder secrète (d) à une deuxième représentation masquée (v) de la valeur (d), dans lequel un espionnage de la valeur à garder secrète (d) est empêché, dans lequel la première représentation masquée (y) repose sur une première règle de masquage avec un premier masque (x) et la deuxième représentation masquée (v) repose sur une deuxième règle de masquage avec un deuxième masque (u), et dans lequel lors du calcul de la deuxième représentation masquée (v), au moins un tableau calculé préalablement (T, C) comprenant une pluralité d'entrées est utilisé et le calcul est réalisé sur la base d'au moins un paramètre de brouillage (z).

**2.** Procédé selon la revendication 1, **caractérisé en ce que** chaque entrée dans le tableau ou dans au moins l'un des tableaux (T, C) dépend d'au moins une valeur de masquage déterminée préalablement (r, s).

**3.** Procédé selon la revendication 2, **caractérisé en ce que** le tableau ou au moins l'un des tableaux est un tableau comparatif (C) qui indique, pour chaque indice du tableau (i), le résultat d'une comparaison entre une valeur dépendant de l'indice du tableau (i) et une valeur dépendant de la valeur de masquage ou d'au moins l'une des valeurs de masquage (r, s).

**4.** Procédé exécuté sur ordinateur pour le passage d'une première représentation masquée (y) d'une valeur à garder secrète (d) à une deuxième représentation masquée (v) de la valeur (d), dans lequel un espionnage de la valeur à garder secrète (d) est empêché, dans lequel la première représentation masquée (y) repose sur une première règle de masquage avec un premier masque (x) et la deuxième représentation masquée (v) repose sur une deuxième règle de masquage avec un deuxième masque (u), comprenant l'étape consistant à réaliser un calcul en utilisant au moins un tableau comparatif (C) qui indique, pour chaque indice du tableau (i), le résultat d'une comparaison entre une valeur dépendant de l'indice du tableau (i) et une valeur dépendant d'au moins une valeur de masquage (r, s).

**5.** Procédé selon la revendication 3 ou la revendication 4, **caractérisé en ce que** la valeur dépendant de la valeur de masquage ou d'au moins l'une des valeurs de masquage (r, s) est déterminée sur la base du paramètre de brouillage (z) ou d'au moins l'un des paramètres de brouillage soit par la valeur de masquage complétée, soit par la valeur de masquage non complétée (r, s).

**6.** Procédé selon l'une des revendications 3 à 5, **caractérisé en ce que** chaque entrée dans le tableau comparatif (C) indique une valeur binaire.

**7.** Procédé selon l'une des revendications 3 à 6,
**caractérisé en ce que** le tableau comparatif (C) est appliqué plusieurs fois à des sections consécutives d'un résultat intermédiaire afin de déterminer à chaque fois une valeur de transfert.

**8.** Procédé selon l'une des revendications 1 à 7, **caractérisé en ce que** lors de la détermination de la deuxième représentation masquée (v), au moins un résultat intermédiaire est utilisé sur la base du paramètre de brouillage (z) ou d'au moins l'un des paramètres de brouillage de façon complétée ou non complétée.

**9.** Procédé selon l'une des revendications 1 à 8, **caractérisé en ce qu'**un indice (i) du tableau ou d'au moins l'un des tableaux (T, C) présente une longueur binaire qui représente une fraction de la longueur binaire de la première et/ou de la deuxième représentation masquée (y, v) et **en ce que** lors de la détermination de la deuxième représentation masquée (v), un accès répété au tableau ou à au moins l'un des tableaux (T, C) est effectué.

**10.** Procédé selon l'une des revendications 1 à 9, **caractérisé en ce que** le procédé comprend les étapes consistant à :

- déterminer une troisième représentation masquée de la valeur à garder secrète (d), la troisième représentation masquée reposant sur la première règle de masquage avec un troisième masque ;
- convertir la troisième représentation masquée dans une quatrième représentation masquée de la valeur à garder secrète (d) en utilisant le tableau ou au moins l'un des tableaux (T, C), la quatrième représentation masquée reposant sur la deuxième règle de masquage avec un quatrième masque ; et
- déterminer la deuxième représentation masquée (v) de la valeur à garder secrète (d) à partir de la quatrième représentation masquée.

**11.** Procédé selon l'une des revendications 1 à 10, **caractérisé en ce que** le deuxième masque (u) peut être choisi librement.

**12.** Procédé selon l'une des revendications 1 à 11, **caractérisé en ce que** le tableau ou au moins l'un des tableaux (T, C) est prédéterminé ou est calculé dans une étape préparatoire du procédé.

**13.** Procédé selon l'une des revendications 1 à 12, **caractérisé en ce que** les valeurs de bits d'état d'un processeur sont statistiquement indépendantes de la valeur à garder secrète (d) pendant l'exécution du procédé.

**14.** Procédé selon l'une des revendications 1 à 13, **caractérisé en ce que** le procédé sert à la protection contre les attaques SPA et/ou DPA.

**15.** Produit de programme informatique comprenant une pluralité d'instructions de programme, qui ordonnent au moins à un processeur d'exécuter un procédé selon l'une des revendications 1 à 14.

**16.** Dispositif, en particulier support de données portable, comprenant au moins un processeur et au moins une mémoire, le dispositif étant aménagé pour exécuter un procédé selon l'une des revendications 1 à 14.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 0251064 A1
- DE 19822217 A1


### In der Beschreibung aufgeführte Nicht-Patentliteratur


- **J.-S. CORON ; L. GOUBIN.** On Boolean and Arithmetic Masking against Differential Power Analysis. *Workshop on Cryptographic Hardware and Embedded Systems 2000 (CHES 2000),* 2000, vol. 1965, 231-237
- **L. GOUBIN.** A Sound Method for Switching between Boolean and Arithmetic Masking. *Workshop on Cryptographic Hardware and Embedded Systems 2001 (CHES 2001),* 2001, vol. 2162, 3-15